# EUROPEAN PATENT SPECIFICATION

(11) **EP 4 279 228 B1**
(45) Date of publication and mention of the grant of the patent: **10.12.2025**
(21) Application number: 22174695.1
(22) Date of filing: 20.05.2022
(51) Int. Cl.: B25J 15/00, B25J 15/02, B25J 15/08, G01N 35/00, G01N 35/04

(54) **GRIPPING APPARATUS FOR GRIPPING A SAMPLE CONTAINER**
GREIFVORRICHTUNG ZUM GREIFEN EINES PROBENBEHÄLTERS
APPAREIL DE PRÉHENSION PERMETTANT DE SAISIR UN RÉCIPIENT D'ÉCHANTILLONS

(43) Date of publication of application: 22.11.2023
(73) Proprietor: F. Hoffmann-La Roche AG, 4070 Basel (CH); Roche Diagnostics GmbH, 68305 Mannheim (DE)
(72) Inventor: ADDIHALLI NARAYANA, Avinash, 70806 Kornwestheim (DE); GUTMANN, Timo, 70806 Kornwestheim (DE); KOLLMER, Markus, 70806 Kornwestheim (DE); KRAETSCHMER, Marius, 70806 Kornwestheim (DE); KULITSKYI, Andrii, 70806 Kornwestheim (DE); LEONTJEVS, Vladimirs, 70806 Kornwestheim (DE); PAULS, Jan, 12099 Berlin (DE)
(74) Representative: Altmann Stößel Dick Patentanwälte PartG mbB

(56) References cited:
- JP-A- H07 205 215
- US-A1- 2017 282 379
- US-A1- 2020 384 655
- US-B2- 11 167 430

## Description

### Technical Field

A gripping apparatus for gripping a sample container, a gripper finger and a laboratory instrument for handling samples comprised in a sample container is proposed. The devices specifically may be used in the field of medical or chemical laboratories, in particular in the field of in-vitro diagnostic testing. Other fields of application, however, are feasible.

### Background art

In-vitro diagnostic testing has a major effect on clinical decisions, providing physicians with pivotal information. In a laboratory, a sample to be processed may be comprised by a sample container such as a sample tube. During at least some processing steps performed in the laboratory, the sample container may be gripped by a gripping apparatus e.g. within a laboratory instrument.

US 2020384655 describes a gripping device for handling sample containers. The sample containers are closed by caps of a given cap type or are not closed by caps. The gripping device comprises a number of fingers configured to collectively cause gripping of a sample container, a tactile sensor device arranged at at least one of the fingers and configured to sample a longitudinal profile of the sample container and of the cap, if any, being gripped, and a control device coupled to the tactile sensor device. The control device determines if the sample container is closed by a cap or not closed by a cap based on the sampled longitudinal profile.

### Summary

It is the purpose of this invention to provide devices that expand the current state of the art. For this purpose, a gripping apparatus, a gripper finger, and a laboratory instrument that expand the current state of the art. For this purpose, gripping apparatuses, gripper fingers, and a laboratory instrument with the features of the independent claims are proposed. Particular embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

A gripping finger for a gripping apparatus for gripping a sample container is proposed. The invention is defined by the features of claim 1. The gripper finger for a gripping apparatus for gripping a sample container comprises
- a gripper finger body comprising a gripping surface for gripping a sample container,
- wherein the gripper finger comprises at least one contacting surface elastically mounted to the gripper finger body,
- wherein the at least one contacting surface is elastically mounted to the gripper finger via an elastic element,
- characterized in that the at least one contacting surface and the elastic element are comprised in a monolithic element.

Further, a gripping apparatus for gripping a sample container according to claim 6 is proposed. The gripping apparatus comprises
- a gripper body comprising a gripper actuator;
- at least two gripper fingers each comprising a gripping surface,
   ∘ wherein at least one of the gripper fingers is movably coupled to the gripper body, and
   ∘ wherein the gripping apparatus is designed for gripping a sample container with the gripping surfaces of the at least two gripper fingers by moving the at least one movable gripper finger; and
- at least one of the gripper fingers is a gripper finger according to any one of the claims 1 to 5.

According to some embodiments, the at least one contacting surface is designed for erecting an initially non-erected sample container before the sample container is gripped by the gripping apparatus.

According to some embodiments, the at least one contacting surface is designed for centering an initially non-centered sample container between the at least two gripper fingers before the sample container is gripped by the gripping apparatus.

According to some embodiments,
- the gripping apparatus is designed for gripping a sample container having a sample container axis,
- the at least two gripper fingers define a gripping axis, and
- the at least one contacting surface is designed for aligning the sample container axis of a sample container with the gripping axis before the sample container is gripped by the gripping apparatus.

According to some embodiments,
- the at least two gripper fingers define a gripping axis, and
- in a state where the gripping apparatus does not grip a sample container, the at least one contacting surface is designed to be closer to the gripping axis than any of the gripping surfaces.

According to some embodiments, each of the gripper fingers is movably coupled to the gripper body.

According to some embodiments, the gripping apparatus is designed for gripping a sample container by clamping the sample container between the gripping surfaces.

According to some embodiments, the gripping apparatus comprises at least two contacting surfaces.

According to some embodiments, at least one of the at least one contacting surface is attached to a gripper finger.

According to some embodiments, to each of the gripper fingers at least one contacting surface is attached.

According to some embodiments, to each of the gripper fingers exactly one contacting surface is attached.

According to some embodiments, to each of the gripper fingers at least two contacting surfaces are attached.

According to some embodiments, to each of the gripper fingers exactly two contacting surfaces are attached.

According to some embodiments, at least one of the at least one contacting surface is coupled to a gripper finger.

According to some embodiments, at least one of the at least one contacting surface is coupled to a movably coupled gripper finger.

According to some embodiments, every contacting surface of the gripping apparatus is coupled to a gripper finger.

According to some embodiments, at least one of the at least one contacting surface is coupled to the gripper body without being coupled to a movably coupled gripper finger.

According to some embodiments, the at least one contacting surface is elastically mounted to the gripper body via an elastic element.

According to some embodiments, the gripping surfaces of the gripper fingers are un-elastically coupled to the gripper body.

According to some embodiments, the at least one contacting surface itself is rigid.

According to some embodiments, the at least one contacting surface is a contacting point.

According to some embodiments, the at least one contacting surface is a contacting face.

According to some embodiments, the elastic element is a spring and the at least one contacting surface is spring-mounted to the gripper finger body.

According to some embodiments, the spring is pre-loaded.

According to the invention, the at least one contacting surface and the elastic element are comprised in a monolithic element, e.g. a monolithic element of the gripper finger.

According to some embodiments, the monolithic element is directly attached to the gripper finger body.

According to some embodiments, the at least one contacting surface is elastically coupled to the gripper finger body with a first elastic modulus, wherein the gripping surface is elastically coupled to the gripper finger body with a second elastic modulus, the second elastic modulus being larger than the first elastic modulus, wherein a larger elastic modulus is an indication of less elasticity.

According to some embodiments, the gripping surface is un-elastically coupled to the gripper finger body.

According to some embodiments, the gripping surface is rigid.

According to some embodiments, the gripping surface and the at least one contacting surface are both arranged at a gripping side of the gripper finger, the gripping side being the side of the gripper finger body that faces a sample container being gripped by the gripper finger.

According to some embodiments, the gripper finger is designed such that at least in a non-gripping state the gripping surface is closer to the gripper finger body than the at least one contacting surface.

According to some embodiments, the gripper finger is designed such that the at least one contacting surface is closer to a sample container about to be gripped by the gripper finger than the gripping surface.

According to some embodiments, the gripper finger is designed such that the at least one contacting surface has a play that allows the at least one contacting surface to be pushed at least to a level of the gripping surface.

According to some embodiments, the play comprises an elastic play.

According to some embodiments, the play comprises a non-elastic play.

According to some embodiments, the at least one contacting surface is elastically mounted to the gripper finger body in a linear elastic manner.

According to some embodiments, the gripping surface is arranged below the contacting surface.

According to some embodiments, the gripping surface is arranged at a lower end of the gripper finger.

According to some embodiments, at least two contacting surfaces are elastically mounted to the gripper finger body.

According to some embodiments, the at least one contacting surface comprises at least a first section and a second section.

According to some embodiments,
- the first section is designed to apply a first force to a sample container about to be gripped by the gripper finger
- and the second section is designed to apply a second force to a sample container about to be gripped by the gripper finger,
   o wherein the direction of the first force is different from the direction of the second force.

According to some embodiments, at least in one cross-section, the first direction and the second direction differ by at least ten angle-degree from each other.

According to some embodiments, at least in one cross-section, the first section is not parallel to the second section.

According to some embodiments, the first section and the second section are adjacent to each other.

According to some embodiments, the first section and the second section are not adjacent to each other.

According to some embodiments, at least in one cross-section, the first section and the second section are at an angle to each other.

According to some embodiments, in at least one cross-section, the angle is not smaller than ten angle-degree.

According to some embodiments, in at least one cross-section, the at least one contacting surface is not flat.

According to some embodiments, in at least one cross-section, the at least one contacting surface is curved.

According to some embodiments, in at least one cross-section, the at least one contacting surface is convex.

According to some embodiments, in at least one cross-section, the at least one contacting surface is bent.

According to some embodiments of the gripping apparatus, the gripping apparatus comprises at least one of the gripper fingers according to one of the embodiments relating to a gripper finger.

According to some embodiments of the gripping apparatus, the at least one contacting surface elastically mounted to the gripper finger according to one of the embodiments relating to a gripper finger is at least one of the at least one elastically mounted contacting surface according to one of the embodiments relating to the elastically mounted contacting surface above.

According to some embodiments of the gripping apparatus, at least two gripper fingers according to one of the embodiments relating to a gripper finger are diametrically arranged in the gripping apparatus.

According to some embodiments of the gripping apparatus, all the gripper fingers of the gripping apparatus are gripper fingers according to one of the embodiments relating to a gripper finger.

Further proposed is a laboratory instrument for handling a sample container comprising one of the gripping apparatus according to one of the embodiments relating to a gripping apparatus.

According to some embodiments, the laboratory instrument is designed for handling a sample comprised in the sample container.

According to some embodiments, the laboratory instrument is an analytical laboratory instrument configured to obtain at least one measurement value.

According to some embodiments, the laboratory instrument is a pre-analytical laboratory instrument.

According to some embodiments, the laboratory instrument is a post-analytical laboratory instrument.

The following gripping apparatuses, gripper fingers, and laboratory instruments are proposed:

### Short description of the Figures

Further optional features and embodiments will be disclosed in more detail in the subsequent description of embodiments, e.g. in conjunction with the dependent claims. Therein, the respective optional features may be realized in an isolated fashion as well as in any arbitrary feasible combination, as the skilled person will realize. The scope is not restricted by the shown embodiments. The embodiments are schematically depicted in the Figures. Therein, identical reference numbers in these Figures refer to identical or functionally comparable elements.

In the Figures:
Figure 1 shows an embodiment of a laboratory instrument comprising a gripping apparatus;
Figures 2A and 2B show an embodiment of a gripper finger;
Figure 3 shows gripping a sample container by using gripper fingers;
Figures 4A to 4C show a side view of a sample container to be gripped by an exemplary gripping apparatus;
Figure 5 shows a view from below on gripper fingers of an exemplary gripper apparatus;
Figures 6A and 6B show an embodiment of a gripping apparatus in perspective view;
Figures 7A and 7B show a view from below on the embodiment of the gripping apparatus of Figures 6A and 6B;
Figures 8A and 8B show a further embodiment of a gripper finger;
Figures 9A and 9B show a further embodiment of a gripper finger;
Figures 10A and 10B show a perspective view of the embodiment of Figures 9A and 9B;
Figures 11A and 11B show a rear view of the embodiment of Figures 9A and 9B;
Figures 12A and 12B show a further embodiment of the gripper finger;
Figure 13 shows forces applied to a sample container by a gripper finger; and
Figures 14A and 14B show a further embodiment of a gripper body and two gripper fingers.

### Detailed description of the embodiments

Certain terms will be used in this description, the formulation of which should not be interpreted to be limited by the specific term chosen, but as to relate to the general concept behind the specific term.

Proposed is a gripper finger 4 for a gripping apparatus 3 for gripping a sample container 6. The gripping apparatus 3 comprises
- a gripper body 30 comprising a gripper actuator 31;
- at least two gripper fingers 4 each comprising a gripping surface 41, wherein at least one of the gripper fingers is a gripper finger with the features defined in claim 1,
   ∘ wherein at least one of the gripper fingers 4 is movably coupled to the gripper body 30, and
   ∘ wherein the gripping apparatus 3 is designed for gripping a sample container 6 with the gripping surfaces 41 of the at least two gripper fingers 4 by moving the at least one movable gripper finger 4; and
- at least one elastically mounted contacting surface 51 for elastically contacting a sample container 6 about to be gripped by the gripping apparatus 3.

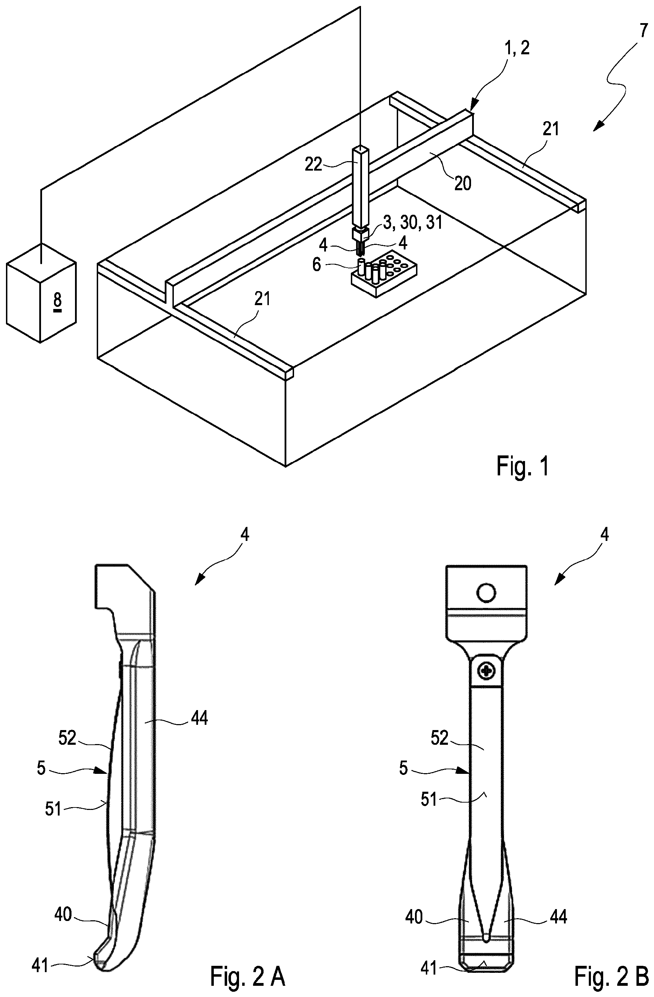

The term "gripping apparatus" as used herein is a broad term and is to be given its ordinary and customary meaning to a person of ordinary skill in the art and is not to be limited to a special or customized meaning. The gripping apparatus 3 may be a device designed for gripping a sample container 6, e.g. in a laboratory instrument 7. The gripping apparatus 3 may comprise a plurality of components interacting with each other and/or a sample container 6 for gripping the sample container 6. An overview of possible components of an exemplary gripping apparatus 3 is shown in Figure 1. Specifically, Figure 1 shows a gripper body 30 comprising a gripper actuator 31 and two gripper fingers 4, each of which comprising a gripping surface 41 for gripping a sample container 6, an example of such a gripper finger 4 is e.g. visible in Figures 2A and 2B.

As shown in Figure 1, the gripping apparatus 3 may be movable by a movement apparatus 2. By moving a gripping apparatus 3 gripping sample container 6, the gripped sample container 6 may be moved. The gripping apparatus 3 may e.g. be used for placing the sample container 6 within the laboratory instrument 7 into a treatment and/or measurement position.

The term "gripping" as used herein is a broad term and is to be given its ordinary and customary meaning to a person of ordinary skill in the art and is not to be limited to a special or customized meaning. According to some embodiments, gripping comprises temporarily connecting the sample container 6 to the gripping apparatus 3 such that the sample container 6 can be lifted or otherwise moved by resp. with the gripping apparatus 3. According to some embodiments, the gripping may comprise performing a force-fit and/or a form-fit with the sample container 6. A force-fit and/or a form-fit connection may e.g. be established between the gripping surfaces 41 and the sample container 6. For example, the gripping may comprise performing a force-fit, wherein the performing of the force-fit comprises clamping the sample container 6 between gripping surfaces 41 of two or more gripper fingers 4. In addition or alternatively to the force-fit, the gripping may comprise performing a form-fit. According to some embodiments, the gripping surface 41 is designed for establishing a form-fit connection with a sample-container 6, wherein e.g. at least a part of the gripping surface 41 is shaped as a negative of at least a part of a sample container 6. A form-fit connection between the gripping surface(s) 41 and the sample-container 6 can allow moving the sample container 6 by moving the gripping surface(s) 41 and/or other parts of the gripper apparatus 3. Gripping may e.g. be used for one or more of holding, picking, tilting, grasping, lifting, positioning, moving, handling, or transporting a sample container 6.

The term "sample container" as used herein is a broad term and is to be given its ordinary and customary meaning to a person of ordinary skill in the art and is not to be limited to a special or customized meaning. According to some embodiments, a sample container may be designed for containing a sample. According to some embodiments, the sample container 6 may be or may comprise at least one receptacle which is designed for containing a content received in the receptacle such as a sample, e.g. a liquid sample, or reagent, e.g. a fluid reagent. According to some embodiments, the sample container 6 may be designed for containing a biological sample or a quality control (QC) sample. According to some embodiments, the sample container 6 may be designed for containing at least one reagent.

According to some embodiments, the sample container 6 may have an elongated shape.

According to some specific embodiments, the sample container 6 may have a cylindrical shape such as a tube. According to some embodiments, the sample container 6 may be a piece of laboratory glass- or plastic-ware optionally comprising a cap on its upper end. For example, the sample container 6 may be a glass or transparent plastic tube. According to a specific embodiment, the sample container 6 may be a cylindrical tube, e.g. a cylindrical tube having a circular and/or polygonal cross-section. Other types or forms of sample containers 6 are also possible.

According to some embodiments, the sample container 6 may comprise a bottom and a body. The bottom may be designed for confining the sample container 6 at the sample container's lower end. The body may be designed depending on the shape of the sample container 6, e.g. a tube-like shape for a sample container 6 in form of a tube. According to some embodiments, the sample container 6 may comprise a cap for sealing the sample container 6.

The term "sample" as used herein is a broad term and is to be given its ordinary and customary meaning to a person of ordinary skill in the art and is not to be limited to a special or customized meaning. According to some embodiments, the sample may be or may comprise at least one biological material that may potentially comprise at least one analyte of interest. According to some embodiments, the sample may be or may comprise at least one biological specimen. For example, the sample may comprise a bodily fluid, such as blood, blood serum, blood plasma, interstitial fluid, urine, saliva or other types of body fluids. According to some embodiments, the sample may be a liquid sample. According to some embodiments, the sample may be a solid sample, for example, at least one sample of tissue.

The gripping apparatus 3 comprises a gripper body 30. The term "gripper body" as used herein is a broad term and is to be given its ordinary and customary meaning to a person of ordinary skill in the art and is not to be limited to a special or customized meaning. According to some embodiments, the gripper body 30 may be a mounting element. According to some embodiments, the gripper body 30 may be designed such that further elements, in particular gripper fingers 4 and/or optionally auxiliary structures, of the gripping apparatus 3 are mountable to the gripper body 30. The gripper body 30 may e.g. comprise a housing and a gripper actuator 31 arranged within the housing.

The gripper body 30 comprises a gripper actuator 31. The term "gripper actuator" as used herein is a broad term to which shall be given its ordinary and common meaning as understood by those skilled in the art. According to some embodiments, the gripper actuator 31 may be designed for acting on at least one further element of the gripping apparatus 3 in at least one manner, e.g. inducing, directly or indirectly, a movement on the at least one further element. For example, the gripper actuator 31 may be designed for performing one or more specific actuation to one or more gripper fingers 4 such as for moving a jaw to which a gripper finger 4 is connected to, e.g. moving said jaw in a line. The gripper actuator 31 may comprise a motor; the motor may be designed for comprising at least one of a mechanic, electric, magnetic, and/or pneumatic component; in particular the motor can be an electric, magnetic, and/or pneumatic motor. For example, the gripper actuator 31 may comprise at least one actuator selected from the group consisting of: a pusher; a lever; a permanent magnet; an electromagnet; a turner, for example a turner wheel. According to some embodiments, the gripper actuator 31 is designed for moving one or more jaws and thereby gripper finger(s) 4 attached to the jaw(s). In this embodiment, a gripper finger 4 is movably coupled to the gripper actuator 31 and thereby to the gripper body 30. The gripper actuator 31 may e.g. be mechanically and/or magnetically connected to the jaw(s).

According to some embodiments, the gripping apparatus 3 may be attachable to a robotic movement apparatus 2, e.g. in that the gripper body 30 is attachable to a robotic movement apparatus 2. The robotic movement apparatus 2 may comprise a gantry axis system and/or a robotic arm. A gantry axis system may constitute a coordinate system. For example, a plane parallel to a plane defined by an instrument table of a laboratory instrument may be the xy-plane (comprising an x-axis, and a y-axis that is not parallel, e.g. perpendicular, to the x-axis), wherein a direction perpendicular to this plane may be the z-axis. For example, the gantry axis system may comprise three rails, e.g. a rail each of the x-axis, the y-axis, and the z-axis. According to some embodiments, the robotic movement apparatus 2 may be designed for moving the gripping apparatus 3 and possibly a sample container 6 being gripped by the gripping apparatus 3. In Figure 1, an exemplary embodiment of a robotic movement apparatus 2 is shown comprising a gantry axis system with three rails perpendicular to one another; in this example, the gripping apparatus 3 is attached to the robotic movement apparatus 2 in that the gripper body 30 is attached to the robotic movement apparatus 2 and the gripping apparatus 3 can be moved along three rails in the x-, y-, and z-axis.

According to some embodiments, the gripping apparatus 3 may have and/or may be connected, e.g. communicatively connected, to a control unit 8, e.g. as shown in Figure 1. The connection may allow the control unit 8 to give commands to the gripping apparatus 3, e.g. commands for controlling the gripping apparatus 3. The connection can be implemented using a wired connection and/or via a wireless connection. According to some examples, the control unit 8 is designed for controlling actions of the gripping apparatus 3, e.g. actions of one or more of the gripper fingers 4 (e.g. by controlling actions of the gripping actuator 31). According to some embodiments, the control unit 8 may be configured for controlling gripping of the gripping apparatus 3, e.g. a gripping and/or the releasing from a gripping of a sample container 6.

According to some embodiments, the control unit 8 may be connected, e.g. communicatively connected, to a robotic movement apparatus 2 to which the gripping apparatus 3 is attached to. The connection may be implemented using a wired connection and/or a wireless connection. According to some examples, the control unit 8 is designed for controlling actions of the robotic movement apparatus 2, e.g. the action of moving a gripping apparatus 3 attached to the robotic movement apparatus 2.

The gripping apparatus 3 comprises at least one gripper finger 4 comprising a gripping surface 41. The term "gripper finger" as used herein is a broad term and is to be given its ordinary and customary meaning to a person of ordinary skill in the art and is not to be limited to a special or customized meaning. According to some embodiments, the gripper finger 4 is an element or composition of elements of the gripping apparatus 3 designed for transferring a force provided by the gripper actuator 31 to the sample container 6. The gripping apparatus 3 is designed for gripping a sample container 6 with the gripping surfaces 41 of the gripper fingers 4 by moving the at least one movably coupled gripper finger 4, e.g. in that the sample container 6 is clamped in between the gripping surface 41 of the at least one movably coupled gripper finger 4 and the gripping surface(s) 41 of at least one other gripper finger 4.

According to some embodiments, the gripping apparatus 3 may comprise a plurality of gripper fingers 4 such as two, three, four or more gripper fingers 4 each comprising a gripping surface 41. According to some embodiments, the at least two gripper fingers 4 may be diametrically arranged in the gripping apparatus 3. For example, the gripping apparatus 3 comprises two gripper fingers 4 each comprising a gripping surface 41, e.g. as shown in Figure 1. The two gripper fingers 4 may be designed for closing against each other for gripping a sample container 6 in their center. According to some embodiments, the gripping apparatus 3 may comprise exactly two gripper fingers 4. However, embodiments are feasible wherein the gripping apparatus 3 comprises more than two gripper fingers 4. For example, the gripper apparatus 3 may comprise three or more gripper fingers 4 designed for closing against each other for gripping a sample container 6 in their center.

According to some embodiments, the gripping apparatus 3 may comprise at least one jaw designed for providing a connection between the gripper body 30 and the gripper finger 4, e.g. a connection between the gripper actuator 31 and the gripper finger 4. For example, the gripper actuator 31 may be designed for acting on the jaw, wherein the jaw may be designed for transferring the action of the gripper actuator 31 to the gripper finger 4, which is an example of a gripper finger 4 being movably coupled to the gripper actuator 31 and thereby to the gripper body 30. According to some embodiments, the gripper finger 4 may be designed exchangeable from the jaw. According to some embodiments, a gripper finger 4 is mounted on a jaw such that the gripper finger 4 moves with the jaw being moved by the gripper actuator 31.

According to some embodiments, the gripper finger 4 may comprise a gripper finger body 44. The term "gripper finger body" as used herein is a broad term and is to be given its ordinary and customary meaning to a person of ordinary skill in the art and is not to be limited to a special or customized meaning. According to some embodiments, the gripper finger body 44 may be a corpus of the gripper finger 4 to which further elements of the gripper finger 4 are mountable. For example, further elements of the gripper finger 4, such as a gripping surface 41 and a contacting surface 51, may extend from the gripper finger body 44.

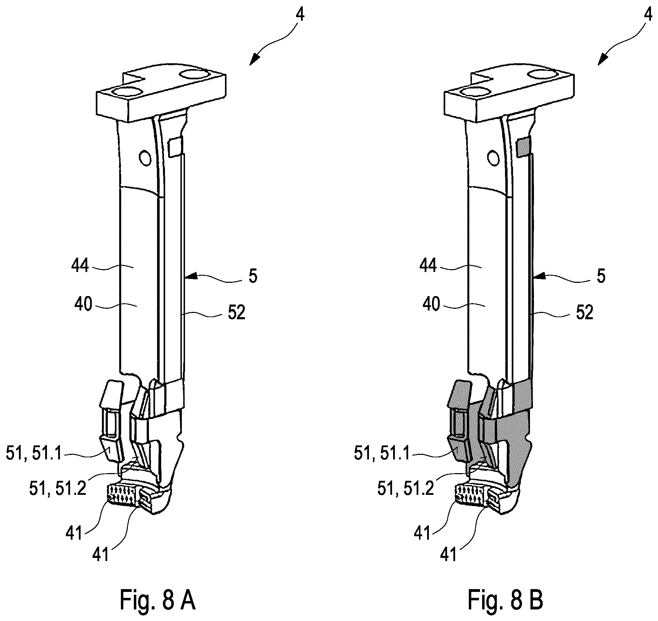

The gripper finger 4 comprises at least one gripping surface 41. The term "gripping surface" as used herein is a broad term and is to be given its ordinary and customary meaning to a person of ordinary skill in the art and is not to be limited to a special or customized meaning. According to some embodiments, the gripping surface 41 is designed for exerting a gripping force on the sample container 6 to be gripped. For example, the gripping force on the sample container 6 to be gripped by using two or more gripping surfaces 41 may exceed the gravitational force such that the sample container 6 can e.g. be lifted by the gripper apparatus 3. According to some embodiments, the gripping surface 41 may be designed for providing and/or functioning as at least one gripping point (i.e. at least a zero-dimensional surface), e.g. a gripping face (i.e. a two-dimensional surface), between the gripper finger 4 and the sample container 6. For example, the gripping surface 41 may be designed for providing one, two or even more gripping points. According to some embodiments, the gripping surfaces 41 serve a clamping surface for clamping the sample container 6 between them. According to some embodiments, the gripper fingers 4 are designed having one gripping surface 41 per gripper finger 4, e.g. as shown in Figures 2A and 2B. According to some embodiments, the gripper fingers 4 are designed having two or more gripping surfaces 41, e.g. as shown in Figures 8A, 8B, 9A, 9B, 10A, 10B, 11A, 11B, 12A and 12B.

According to some embodiments, the gripping apparatus 3 may be designed for gripping a sample container 6 using the gripping surface 41 of at least one gripper finger 4 by moving the gripper finger 4. According to some embodiments, the gripping surface 41 may be designed for exerting a gripping force on the sample container 6, e.g. for clamping the sample container 6 together with a second object (e.g. a gripping surface 41 of a second gripper finger 4).

According to some embodiments, the gripping apparatus 3 may comprise two (or more) gripper fingers 4, each comprising a gripping surface 41, and the gripping apparatus 3 may be designed for gripping a sample container 6 by clamping the sample container 6 between the gripping surfaces 41 of the two (or more) gripper fingers 4. For example, in case of two gripper fingers 4 each having a gripping surface 41, the two gripping surfaces 41 may function as gripper jaws configured for exerting the gripping force with which the gripping apparatus 3 grips the sample container 6.

The gripper fingers 4 may be arranged such that the gripping surfaces 41 act as parallel-jaw grippers.

According to some embodiments, the gripping surface 41 may be formed monolithic with at least one on other part of the gripper finger 4. In particular, the gripping surface 41 may be formed monolithic with the gripper finger 4. According to some specific embodiments, the gripping surface 41 is made of the same material, e.g. a same metal alloy, as at least a part of the gripper finger 4 adjoined to the gripping surface 41. According to an example, the gripper finger 4 is made of a single material, e.g. a single metal alloy.

The term "monolithic" as used herein is a broad term and is to be given its ordinary and customary meaning to a person of ordinary skill in the art and is not to be limited to a special or customized meaning. According to some embodiments, monolithic may refer to a single piece. According to some embodiments, monolithic may refer to an element not separable without damage. According to some embodiments, monolithic may refer to an element not reversible separable.

According to some embodiments, the gripping surface 41 may be attached to other parts of the gripper finger 4, e.g. the gripper finger body 44.

According to some embodiments, the gripping surface 41 comprises a material different from the part of the gripper finger 4 adjoined to the gripping surface 41.

According to some embodiments, the gripping surface 41 may be un-elastically coupled to the gripper body 30, e.g. a jaw thereof. The term "un-elastically coupled" as used herein is a broad term and is to be given its ordinary and customary meaning to a person of ordinary skill in the art and is not to be limited to a special or customized meaning. According to some embodiments, the un-elastically coupling forms a solid connection. According to some embodiments, the un-elastically coupling may form a rigid connection. For example, the rigid connection may have an elastic modulus from 0.5 to 500 GPa. According to some embodiments, the un-elastically coupling may allow transmitting a force, at least partially, from the gripper body 30 or any part thereof to the gripping surface 41 and/or from the gripping surface 41 to the gripper body 30. For example, the force transmitted from the gripper body 30 to an object (e.g. sample container) may be transmitted by more than 90 %.

According to some embodiments, the gripping surface 41 may be attached to the gripper body 30 lacking flexibility, e.g. by using a rigid connection. According to some embodiments, the gripping surface 41 may be un-elastically coupled to the gripper body 30 via the gripper finger 4.

According to some embodiments, the gripping surface 41 may form part of the gripper finger 4, e.g. a stiff part of the gripper finger 4, and the gripper finger is un-elastically (yet possibly movable) to the gripper body.

According to some embodiments, the gripping of a sample container 6 may comprise a force-fit connection of the gripping surfaces 41 and the sample container 6. For example, the gripping apparatus 3 may be designed for gripping the sample container 6 by clamping the sample container 6 between the gripping surfaces 41.

According to some embodiments, the gripping of the sample container 6 may comprise a form-fit connection of the gripping surfaces 41 and the sample container 6. According to some embodiments, a shape of the gripping surface 41 may be selected with respect to the design of the sample container 6. According to some embodiments, the gripping surface 41 may have a convex, concave, or planar shape. For example, in Figures 2A and 2B, the gripping surface 41 is convex. Convex and concave may be defined e.g. with respect to the gripping axis 49.

According to some embodiments, the gripping surface 41 may be an even surface, i.e. without corrugations.

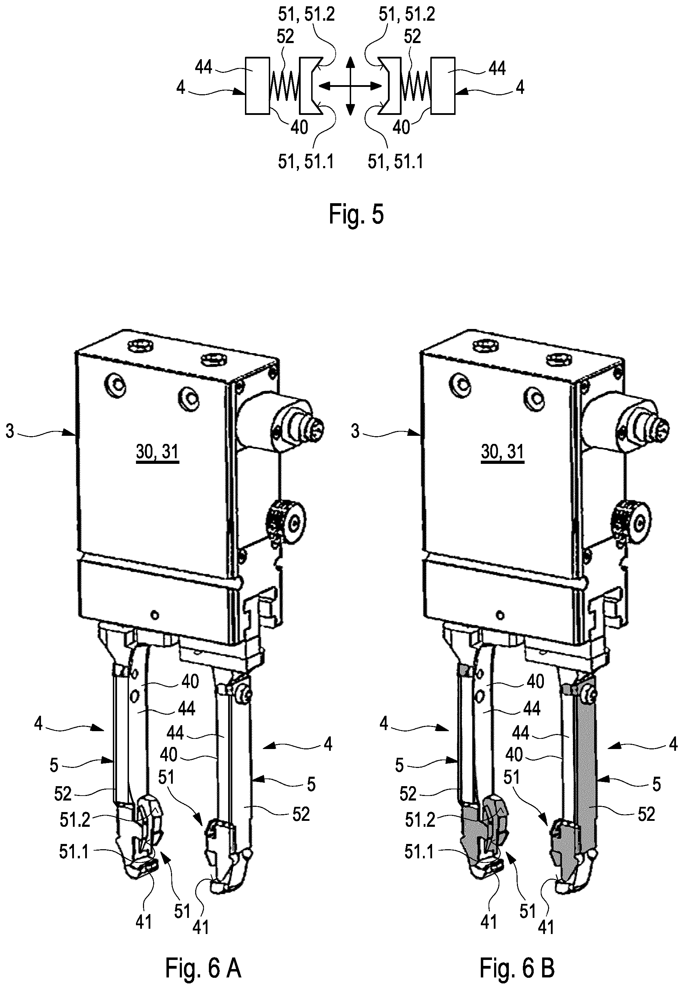

According to some embodiments, the gripping surface 41 may be a corrugated surface; for example, the gripping surface 41 may have at least one corrugation, which may allow reliable gripping of the sample container 6. The corrugation may reduce slippage of the gripping surfaces 41 from the sample container 6. The corrugation may enhance friction. Examples of corrugated gripping surfaces are shown in Figures 6A, 6B, 8A, 8B, 9A, 9B, 10A, 10B, 14A and 14B.

The gripping surfaces 41 may be designed to grip the sample container 6 below the sample container's 6 cap. This can e.g. reduce of the chance of the cap accidently being removed due to the gripping, e.g. when using so-called soft caps. According to some embodiments, the gripping surfaces 41 may be slim in a z-direction, i.e. along the z-axis, wherein the dimension of each gripping surface 41 in the z-direction may e.g. be smaller than 3 mm. According to some specific embodiments, each gripping surface 41 is designed to be small gripping surface 41, e.g. each less than 36 mm². A gripping surface 41 that is slim in the z-direction and/or small may be designed to be a corrugated surface. This can allow e.g. reliably gripping of the sample container 6, as the thereby increased friction between the gripper fingers 41 and the sample container 6 may compensate for a friction reducing effects by being slim in the z-direction and/or being small.

According to some embodiments, the gripping surfaces 41 may be rigid. According to some embodiments, the gripping surface 41 may be rigid. The term "rigid" as used herein is a broad term and is to be given its ordinary and customary meaning to a person of ordinary skill in the art and is not to be limited to a special or customized meaning. According to some embodiments, rigid may refer to a material having an elastic modulus from 0.5 to 500 GPa. According to some embodiments, rigid may refer to almost un-elastically. For example, the gripper finger 4 and the gripping surface 41 may provide a rigid contact or interface with the sample container 6. The contacting surface 51, in contrast, may be elastically mounted to the gripper finger body 44 such that the gripper finger 4 and the contacting surface 51 provide an elastic contact or interface with the sample container 6.

According to some embodiments, the gripping surface 41 may be designed to maintain its shape and/or may not be deformed in usual gripping processes. For example, the gripping surface 41 may comprise at least one rigid material having an elastic modulus from 0.5 to 500 GPa. For example, the rigid material may specifically be a ceramic material or a metal and may have an elastic modulus of 10 GPa to 500 GPa, specifically of 50 GPa to 500 GPa, more specifically of 100 GPa to 400 GPa. Further, the rigid material may be a polymer and may have an elastic modulus of 0.5 GPa to 30 GPa, specifically of 1 GPa to 15 GPa, more specifically of 2 GPa to 10 GPa. Further, the rigid material may be composite material and may have an elastic modulus of 1 GPa to 200 GPa, specifically of 2 GPa to 150 GPa, more specifically of 5 GPa to 100 GPa. According to some embodiments, for example, the gripping surface 41 may comprise at least one metal and/or hard plastic material. For example, the gripping surface 41 may be made of stainless steel. For example, the gripping surface 41 can be made of hard plastic by overmolding or coating the entire gripper finger 4 or the corresponding part of the gripper finger 4 with hard plastic such as ABS, PC/ABS, PUR, and the like.

According to some embodiments, a gripper finger 4 may have a front side at which the gripping surface 41 is arranged and a backside opposing the front side. According to some embodiments, a geometry of the gripper finger 4 may be designed for avoiding damaging a sample container 6 and/or elements such as stickers attached to it when the sample container 6 is being touched by the gripper finger 4, e.g. the backside of the gripper finger 4. For example, the backside of the gripper finger 4 may be at least partially rounded and/or sloped (e.g. in z-direction and/or in x/y-direction) so that neighboring sample containers 6 may be gently pushed away when they are touched by the backside of the gripper finger 4, an example of which can e.g. be seen in Figures 2, 3, 6-10.

According to an embodiment, the gripping surface 41 may be designed slim in z-direction. For example, the gripping surface 41 may be designed having less than half the dimension in z-direction than in x/y-direction. A gripping surface 41 being slim in z-direction may reduce the risk of the gripping surface 41 touching (and thereby possibly damaging) a sticker, e.g. a barcode sticker, attached to the sample container 6.

According to some embodiments, at least one of the gripper fingers 4 (e.g. all gripper fingers 4) may be movably coupled to the gripper body 30, in particular to the gripper actuator 31. The term "the gripper finger is movably coupled to the gripper body" as used herein is a broad term and is to be given its ordinary and customary meaning to a person of ordinary skill in the art and is not to be limited to a special or customized meaning. According to an embodiment, movably coupled to the gripper body 30 may comprise being attached to the gripper body 30 (e.g. such that the gripper finger 4 moves when the gripper body 30 is moved) and being movable relative to the gripper body 30. According to an example, the gripper finger 4 is mounted to a jaw and said jaw is movably coupled to the gripper actuator 41, whereby the gripper finger 4 jaw is movably coupled to the gripper actuator 31 and thereby to the gripper body 30. According to some embodiments, the gripper finger 4 is directly coupled to the gripper body 30, in particular to the gripper actuator 31, or may be coupled to the gripper body 30, in particular to the gripper actuator 31, using at least one auxiliary structure, such as e.g. a jaw. According to some embodiments, the gripper 4 may be movably coupled to the gripper body 30, in particular to the gripper actuator 31, by an arbitrary connection, such as by using a joint, between the gripper finger 4 and the gripper body 30 allowing movement of the gripper finger 4 into at least one direction, in particular relative to the gripper body 30. For example, the gripper finger 4 may be movably coupled to the gripper body 30 such that the gripper finger 4 can be moved to grip the sample container 6 (e.g. by clamping it against another structure, e.g. another gripper finger 4). According to some embodiments comprising a plurality of gripper fingers 4, at least one of the gripper fingers 4 may be movably coupled to the gripper body 30 such that the gripper fingers 4 are allowed for approaching each other and moving away from one another, or vice versa. For example, in case of a plurality of gripper fingers 4, one or more of the gripper fingers 4 may be movable and other gripper fingers 4 may be fixed (e.g. where the movable gripper fingers 4 are designed for moving a sample container 6 towards a fixed gripper finger 4 such that the sample container 6 may be gripped by between at least one moving gripper finger 4 and at least one fixed gripper finger 4), or all gripper fingers 4 may be movable.

According to some embodiments, the gripping apparatus 3 may be designed to be a vertical gripper, i.e. such that the gripper fingers 4 are designed to move in a vertical plane, e.g. in a plane comprising the main axis of inertia of a sample container 6 about to be gripped.

According to some embodiments, the gripping apparatus 3 may be a horizontal gripper, i.e. such that the gripper fingers 4 are designed to move in a horizontal plane, e.g. in a plane perpendicular to the main axis of inertia of a sample container 6 about to be gripped.

The gripping apparatus 3 comprises at least one elastically mounted contacting surface 51 for elastically contacting a sample container 6 about to be gripped by the gripping apparatus 3. According to some embodiments, the gripping apparatus 3 may comprise at least two contacting surfaces 51. According to some embodiments, the gripping apparatus 3 may comprise one or more contacting surfaces 51 per gripper finger 4, e.g. two contacting surfaces per gripper finger 4. The term "contacting surface" as used herein is a broad term and is to be given its ordinary and customary meaning to a person of ordinary skill in the art and is not to be limited to a special or customized meaning. According to some embodiments, the contacting surface 51 may be designed for providing at least one supporting function to the sample container 6, such as erecting and/or centering and/or stabilizing the sample container 6 (e.g. before gripping by the gripping surfaces 41). According to some embodiments, the supporting function provided by the contacting surface 51 may support gripping of the sample container 6 performed by the gripping surface 41. According to some embodiments, the supporting function provided by the contacting surface 51 may assist the gripping of a sample container 6 performed by the gripping surface 41. According to some embodiments, the supporting function provided by the contacting surface 51 may be supportive such as before and/or during gripping a sample container 6 by the gripping surface. According to some embodiments, the contacting surface 51 may be designed for providing the at least one supporting function, e.g. one or more of erecting, centering, or stabilizing a sample container 6 to be gripped, before the gripping force is exerted completely or partially on the sample container 6. For example, the contacting surface 51 may be designed for providing the at least one supporting function before the gripping force is exerted on the sample container 6 at all. For example, the contacting surface 51 may be designed for providing the at least one supporting function before the gripping force is exerted on the sample container 6 by more than 10 %, e.g. by more than 20 %, e.g. by more than 50 %. According to some embodiments, the contacting surface 51 may be designed for exerting a supporting force to the sample container 6, e.g. an erection force (for erecting the sample container 6) and/or a centering force (for centering the sample container 6). The contacting surface 51 can also be referred to as supporting surfaces.

According to some embodiments, the contacting surface 51 may not be designed for exerting a supporting force to the sample container 6 that is sufficient to clamp and lift the sample container 6 in the normal operation of the gripping apparatus 3.

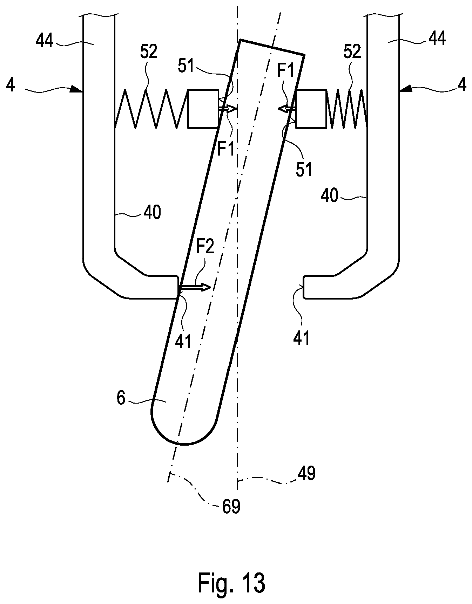

According to a embodiments, the gripping surface(s) 41 and the contacting surface(s) 51 of the gripping apparatus 3 (e.g. of a gripper finger 4) may be designed such that the supporting force exerted to a about to be gripped and/or gripped sample container 6 by the contacting surface(s) 51 is weaker than the gripping force exerted to the gripped sample container 6 by the gripping surface(s) 41, e.g. in that the supporting force exerted by the contacting surface(s) 51 itself is not sufficient to lift the sample container 6. The supporting force and the gripping force can be regarded as two different forces having different points of application, different lines of action, different directions, and/or different magnitudes. The supporting force and the gripping force have different force vectors. Figure 13 shows exemplary force vectors of the supporting force F1 and of the gripping force F2. As shown in Figure 13, the force vector F1 of the supporting force may apply at a different point the sample container 6 than the force vector F2 of the gripping force. Moreover, the force vector F1 may have a lower magnitude than the force vector F2.

According to some embodiments, the contacting surface 51 may be regarded as surface functioning as contact with the sample container 6 without full gripping functionality. Although some force may be exerted by the contacting surfaces 51, the contacting surface 51 may not be designed for carrying out a gripping function (e.g. overcoming a gravitational force acting on the sample container 6) without the gripping surface 41. The gripping force may be exerted mainly by the gripping surfaces 41 of the gripper fingers 4.

According to some embodiments, the gripping surface 41 and the contacting surface 51 may be different elements, e.g. separate elements, of the gripper apparatus 3 (e.g. of the gripper finger(s) 4) fulfilling different functions. For example, the contacting surface 51 may support the sample container 6 such that it may be erected by the contacting surfaces 51. For example, the contacting surface 51 may be designed for centering an initially non-centered sample container 6 between the at least two gripper fingers 4 before the sample container 6 is gripped by the gripping apparatus 3, e.g. by the gripping surfaces 41.

A contacting of a sample container 6 by a contacting surface 51 and a gripping by a gripping surface 41 may become effective at the same movement of the gripper finger 4 for gripping the sample container 6. For example, the erecting and/or centering of the sample container 6 may be performed at the same movement of the gripper finger 4 for gripping the sample container 6. For example, the gripping surface(s) 41 and the contacting surface(s) 51 of the gripping apparatus 3 (e.g. of a gripper finger 4) may be designed such that
- during the movement of the gripper finger 4, the contacting surface 51 contacts the sample container 6 before the gripping surface 41 exerts the full gripping force to the sample container 6 (e.g. before the gripping surface 41 touches the sample container 6);
- after the contacting by the contacting surface 51, the further movement causes a supporting force to be exerted by the contacting surface 51 to the sample container 6, wherein the supporting force e.g. serves as an erection force (for erecting the sample container 6) and/or a centering force (for centering the sample container 6);
- after or while the erection and/or centering of the sample container 6, the further movement cause the exertion of the full gripping force by the gripping surfaces 41 to the sample container 6.

The term "elastically mounted contacting surface" as used herein is a broad term and is to be given its ordinary and customary meaning to a person of ordinary skill in the art and is not to be limited to a special or customized meaning. According to an embodiment, elastically mounted may comprise being attached to at least one further element of the gripping apparatus 3 (e.g. to a gripper finger 4 and/or to the gripper body 30) via an elastic connection and/or an elastic fastening and/or an elastic fixation to the at least one further element of the gripping apparatus 3.

According to some embodiments, the contacting surface 41 may be elastically mounted to at least one further element of the gripping apparatus 3. Several options for elastically mounting the contacting surface 41 to at least one further element of the gripping apparatus 3 exist. For example, the further element may be a gripper finger 4, a jaw, and/or any part connected the gripper actuator 31. For example, in Figures 2 to 13, the mounting is realized by elastically mounting the contacting surface 51 on the gripper finger 4 which is then, e.g. un-elastically, mounted on the gripper body 30.

According to some embodiments, at least one of the at least one contacting surface 51 is attached to a gripper finger 4. According to some embodiments, at least one contacting surface 51 may be attached to each of the gripper fingers 4. According to some embodiments, to each of the gripper fingers 4 exactly one contacting surface 51 may be attached. According to some embodiments, to each of the gripper fingers 4 at least two contacting surfaces 51 may be attached. According to some specific embodiments, to each of the gripper fingers 4 exactly two contacting surfaces 51 may be attached. The term "attached to the gripper finger 4" as used herein is a broad term and is to be given its ordinary and customary meaning to a person of ordinary skill in the art and is not to be limited to a special or customized meaning. According to some embodiments, the contacting surface 51 may be attached to the gripper finger 4 via a connection. According to some embodiments, the contacting surface 51 may be attached to the gripper finger 4 via a fastening. According to some embodiments, the contacting surface 51 may be attached to the gripper finger 4 via a fixation.

According to some embodiments, at least one of the at least one contacting surface 51 may be coupled to a gripper finger 4. The term "coupled to the gripper finger 4" as used herein is a broad term and is to be given its ordinary and customary meaning to a person of ordinary skill in the art and is not to be limited to a special or customized meaning. According to some embodiments, the contacting surface is directly mounted to the gripper finger 4 and thereby coupled to the gripper finger 4. According to some embodiments, coupling of a contacting surface 51 to a gripper finger 4 may comprise being attached to the gripper finger 4, e.g. as shown in Figures 2A, B, 3, 4B, C, 5, 6A, B, 7A, B, 8A, B, 9A, B, 10A, B, 11A, B, 12A, 12B, and 13.

According to some embodiments, at least one of the at least one contacting surface 51 may be coupled to a gripper finger 4 movably coupled to the gripper body 30. According to some embodiments, every contacting surface 51 of the gripping apparatus is coupled to a gripper finger 4. According to some specific embodiments, coupling of contacting surface 51 to a movably coupled gripper finger 4 may comprise being attached to the gripper finger 4 such that the contacting surface 51 moves when the gripper finger 4 is moved, e.g. as shown in Figures 2A, B, 3, 4B, C, 5, 6A, B, 7A, B, 8A, B, 9A, B, 10A, B, 11A, B, 12A, 12B, and 13.

According to some embodiments, the at least one contacting surface 51 may be elastically mounted to the gripper body 30, e.g. by being elastically mounted to a gripper finger 4 that itself is (elastically or non-elastically) mounted to the gripper body 30 and/or by being elastically mounted directly to the gripper body 30 (e.g. a jaw thereof).

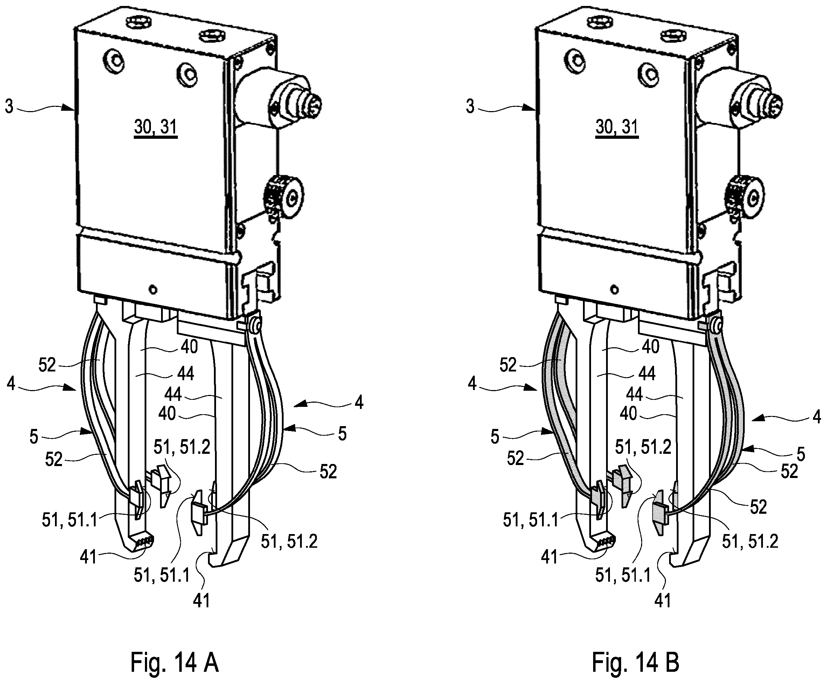

According to some embodiments, at least one of the at least one contacting surface 51 may be coupled to the gripper body 30 without being coupled to a gripper finger 4 movably coupled to the gripper body 30; according to an example, the contacting surface 51 may be coupled to a coupled gripper finger 4 not movably coupled to the gripper body 30. According to some embodiments, coupling of contacting surface 51 to the gripper body 30 may comprise being attached to the gripper body 30 such that movement of the contacting surface 51 is independent from a movement of the gripper finger 4, e.g. where the contacting surface 51 is coupled to a first jaw of the gripper body 30, the gripper finger 4 is coupled to a second jaw of the gripper body 30, and the first jaw and the second jaw can be moved independently of each other. According to some embodiments, coupling of each contacting surface 51 to the gripper body 30 may comprise being attached to the gripper body 30 such that movement of the contacting surface 51 is independent from a movement of each of the gripper fingers 4, e.g. where each contacting surface 51 and each gripper finger 4 is coupled to independently movable jaws of the gripper body 30. For example, Figures 14A and 14B show an embodiment, in which the contacting surface 51is elastically mounted directly to the gripper body 30, e.g. by a jaw thereof. If connected to the same jaw as a gripper finger 4, the contacting surface 51 may be moved together with said gripper finger 4 by moving said jaw.

According to some embodiments, the contacting surface 51 may be mounted via an elastic element 52. The term "elastic element" as used herein is a broad term and is to be given its ordinary and customary meaning to a person of ordinary skill in the art and is not to be limited to a special or customized meaning. According to some embodiments, the elastic element 52 may have elastic properties. According to some embodiments, the elastic element 52 may have linear elastic properties according to Hooke's law. According to some embodiments, the contacting surface 51 may be designed for retreating in a direction against the supporting force exerted by the contacting surface 51 to the sample container 6 (e.g. for retreating outwards when pressed inwards towards the sample container 6), e.g. retreating - at least in part - in accordance with Hooke's law. For example, the elastic element 52 may exert a spring force retreating in a direction against the supporting force. According to some embodiments, the contacting surface 51 itself may be elastic. According to some embodiments, the contacting surface 51 may be designed for being at least partially deformed when exerting the force to the sample container 6. According to some embodiments, the contacting surface 51 may be elastically mounted via at least one elastic element 52. In this case, the contacting surface 51 can be rigid or itself be elastic.

According to some embodiments, the at least one contacting surface 51 may be elastically mounted to the gripper finger body 44. According to some embodiments, the at least one contacting surface 51 may be elastically mounted to the gripper finger body 44 in a linear elastic manner.

According to some embodiments, the at least one contacting surface 51 may be elastically mounted to the gripper finger body 44 via an elastic element 52, e.g. as shown in Figures 2 to 13. According to some embodiments, the elastic element 52 is a spring 52 and the at least one contacting surface 51 is spring-mounted to the gripper finger body 44. For example, Figure 5 shows an example of an embodiment where the contacting surface 51 is mounted to the gripper finger body 44 via an elastic element 52 realized as a spiral spring. According to some embodiments, the spring 52 is pre-loaded, such as can be seen in Fig-ures 2A and 2B.

According to some embodiments, the at least one contacting surface 51 and the elastic element 52 may be comprised in a monolithic element 5, e.g. a monolithic element 5 of the gripper finger 4. The term "monolithic element" as used herein is a broad term and is to be given its ordinary and customary meaning to a person of ordinary skill in the art and is not to be limited to a special or customized meaning.

According to some embodiments, the monolithic element 5 may be a one-piece element.

According to some embodiments, the monolithic element 5 may be an element not separable without damage.

According to some embodiments, the monolithic element 5 may be an element not reversible separable.

According to some embodiments, the monolithic element 5 may be directly attached to the gripper finger body 44. The term "directly attached" as used herein is a broad term and is to be given its ordinary and customary meaning to a person of ordinary skill in the art and is not to be limited to a special or customized meaning. According to some embodiments, the monolithic element 5 may be attached to the gripper finger body without additional elastic mounting elements. According to some embodiments, at one end of the monolithic element 5, such as the end closer to the gripper body 30, the monolithic element 5 may be connected to the gripper finger body 44 by a screw connection.

According to some embodiments, for example, the gripping apparatus 3 may comprise a jaw to which the gripper finger body 44 is connectable, wherein the monolithic element 5 may be attached, e.g. directly attached, to the jaw.

According to some embodiments, the at least one contacting surface 51 may be elastically coupled to the gripper finger body 44 with a first elastic modulus, wherein the gripping surface 41 may be elastically coupled to the gripper finger body 44 with a second elastic modulus, the second elastic modulus being larger, than the first elastic modulus. A larger elastic modulus is an indication of less elasticity. According to some embodiments, the second elastic modulus may be significantly larger than the first modulus. For example, the second elastic modulus may be ten times larger than the first modulus.

According to some embodiments, the gripping surface 41 may be is un-elastically coupled to the gripper finger body 44.

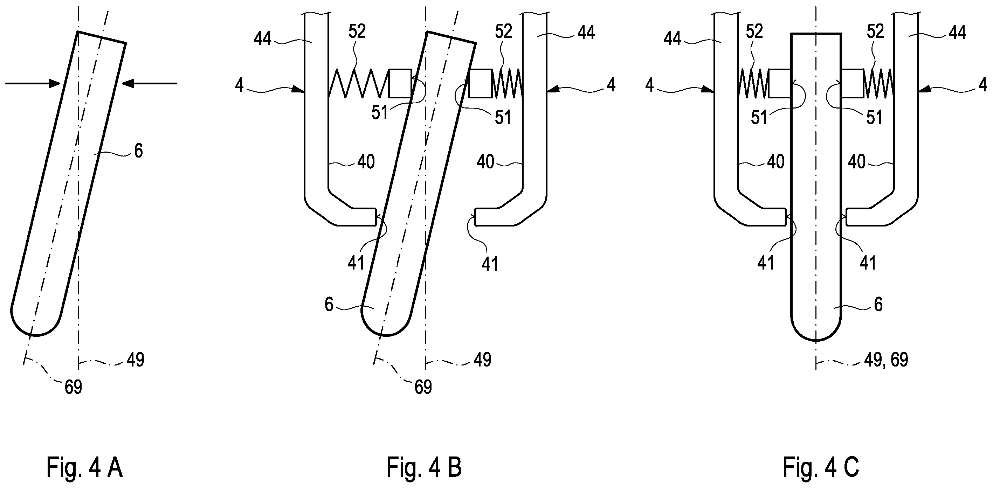

According to some embodiments, the contacting surface 51 and/or the at least one elastic element 52 via which the contacting surface 51 is mounted, e.g. to the gripper body 30 or gripper finger body 44, may be designed for absorbing forces exerted when contacting the sample container 6. For example, the contacting surface 51 and/or at least one elastic element 52 via which the contacting surface 51 is mounted to the gripper body 30 or gripper finger body 44 may be at least partially deformed when contacting the sample container 6 with the contacting surface 51 (such as e.g. seen for the right hand contacting surface's elastic element 52 of Figure 4B); the contacting surface 51 and/or at least one elastic element 52 via which the contacting surface 51 is mounted to the gripper body 30 or gripper finger body 44 may be designed to return to its original shape when releasing the sample container 6.

According to some embodiments, the contacting surface 51 and/or the elastic element 52 may have an elastic modulus, in particular Young's modulus of < 0.5 GPa. For example, the contacting surface 51 and/or the elastic element 52 may have an elastic modulus δ of 0.001 GPa ≤ δ < 0.5 GPa, specifically of 0.005 GPa ≤ δ < 0.5 GPa, more specifically of 0.01 GPa ≤ δ ≤ 0.1 GPa. According to some embodiments, the contacting surface 51 and/or an elastic element 52, via which the contacting surface 51 is mounted, may be made of a material having elastic properties such that a certain movement of the sample container 6 may be allowable (e.g. when the sample container 6 is contacted but not completely gripped).

According to some embodiments, the elastic element 52 may be made from soft or hard plastic. For example, different types of thermoplastics such as PEI, POM, PUR, PVC or the like may be used.

According to some embodiments, the at least one contacting surface 51 itself may be rigid. For example, the contacting surface 51 may be made of at least one rigid material such as a metal and/or a plastic material such as a hard plastic. According to some embodiments, the contacting surface 51 may be designed for maintaining its shape and/or may not be deformed in usual gripping processes. For example, the contacting surface 51 may comprise at least one rigid material having an elastic modulus from 0.5 to 500 GPa. For example, the rigid material may specifically be a ceramic material or a metal and may have an elastic modulus of 10 GPa to 500 GPa, specifically of 50 GPa to 500 GPa, more specifically of 100 GPa to 400 GPa. Further, the rigid material may be a polymer and may have an elastic modulus of 0.5 GPa to 30 GPa, specifically of 1 GPa to 15 GPa, more specifically of 2 GPa to 10 GPa. Further, the rigid material may be composite material and may have an elastic modulus of 1 GPa to 200 GPa, specifically of 2 GPa to 150 GPa, more specifically of 5 GPa to 100 GPa. According to an example, the at least one contacting surface 51 itself may not comprise a rubber or a foam.

According to some embodiments, the elastic element 52 may be designed for providing the elastically mount to the gripper body 30.

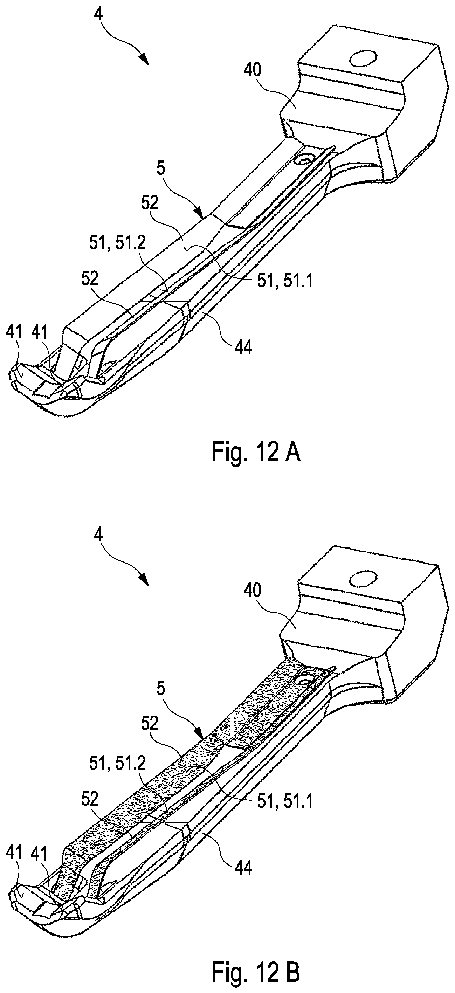

For example, the elastic element 52 may be or may comprise at least one spring such as a coil spring (as e.g. shown in Figures 4B, C, 5, and 13) or leaf spring (as e.g. shown in Fig-ures 2A, B, 3, 9 A, B, 10 A, B, 11 A,B, 12 A, B and 14 A, B). According to some specific embodiments, the spring may be pre-loaded (as e.g. shown in Figures 2A, B and 12 A, B). For example, as shown in Figures 2A and 2B, the contacting surface 51 is realized as a leaf spring that is directly mounted to the gripper finger body 44 using a screw. The leaf spring is preloaded using a hole, e.g. a recess, which holds the leaf spring under tension.

According to some embodiments, the gripper finger 4 may be designed such that the contacting surface 51 has a play that allows the contacting surface 51 to be pushed at least to a level of the gripping surface 41. According to some embodiments, the play may comprises an elastic play, e.g. due to the deformation of an elastic (mounting) element. For example, when contacting a sample container 6, the elastic element 52 may be deformed, e.g. in case of a spiral spring compressed, such that the contacting surface 51 can be pushed at least to a level of the gripping surface 41, e.g. as indicated by Figures 4B and 4C. For example, in case of a leaf spring, e.g. as shown in Figures 12 A and 12 B, the play may be as large as allowing a bending of the leaf spring in a direction of the gripper finger 4. According to some embodiments, the play may comprise a non-elastic play, e.g. due to a play in the mechanic mounting itself. According to some examples, after initial contact the play first is non-elastic and after a certain amount of movement the play is elastic, e.g. after the non-elastic play has been utilized.

According to some embodiments, the contacting surface 51 may be designed for providing a contacting point (i.e. at least a zero-dimensional surface) and/or contacting face (i.e. at least a two-dimensional surface) with the sample container 6.

According to some embodiments, the at least one contacting surface 51 may be designed as a contacting point.

According to some embodiments, the least one contacting surface 51 may be designed as a contacting face.

According to some embodiments, in at least one cross-section the at least one contacting surface 51 may be not flat. According to some embodiments, the contacting surface 51 may be non-planar. For example, the contacting surface 51 may be bent and/or curved.

According to some embodiments, in at least one cross-section, the at least one contacting surface 51 may be bent, an example of which is shown e.g. in Figure 2.

According to some embodiments, in at least one cross-section, the at least one contacting surface 51 may be curved, an example of which is shown in Figure 2. For example, as indicated in Fig. 2A, the contacting surface 51 may be curved. According to some embodiments, the curved contacting surface 51 may be a basic shape of the contacting surface, i.e. without any influence by forces and/or further elements.

According to some embodiments, in at least one cross-section, the at least one contacting surface 51 may be convex, as shown in Figure 2A.

According to some embodiments, the gripping surface 41 may be arranged below the contacting surface 51. According to some embodiments, the gripping surface 41 may be arranged at a lower end of the gripper finger 4, e.g. as can be seen in the example of Figures 2.

According to some embodiments, the gripper finger 4 comprises two ends, denoted as upper and lower end. The upper end may be the end connectable to the gripper body 30 and the lower end may be the opposing end of the gripper finger 4. According to some embodiments, the gripping surface 41 may be arranged below the contacting surface 51. The term "below" may refer to below in a direction from the gripper body 30 towards the lower end of the gripper finger 4. According to some embodiments, the contacting surface 51 may be arranged closer to the gripper body 30 than the gripping surface 41. For example, as shown in Figure 4B, the gripping surfaces 41 of the respective gripper fingers 4 are arranged at the lower end of the gripper finger 4. The contacting surface 51 may be arranged above the gripping surface 41, respectively. The contacting surface 51 of the respective gripper fingers 4 extend further from the gripper finger body 44 than the gripping surface 41, as can e.g. be seen in the left side gripper finger 4 of Figure 4B (the right side gripper finger's contacting's surface elastic element 52 in the situation of Figure 4B is compressed due to the supporting force applied to the sample container 6).

According to an example, the sample container 6 to be gripped comprises a cap, e.g. a flexible cap, and the gripping apparatus 3 is designed for gripping the sample container 6 with its gripping surfaces 41 below the cap such that the gripping surfaces 41 touch a wall of the sample container 6 but not the cap, while the contacting surface 51 may be designed for contacting the cap; this can e.g. allow stabilizing the cap using the contacting surfaces 51 while the sample container 6 is being gripped (e.g. while being moved). The contacting surfaces 51 being elastically mounted may allow them to adapt to various sizes and shapes of cap.

According to some embodiments, the gripping surface 41 and the at least one contacting surface 51 may be both arranged at a gripping side 40 of the gripper finger 4, the gripping side 40 being the side of the gripper finger body 44 that faces a sample container 6 to be gripped by the gripper finger 4. The term "being gripped" as used herein is a broad term and is to be given its ordinary and customary meaning to a person of ordinary skill in the art and is not to be limited to a special or customized meaning. According to some embodiments, the term "being gripped" may refer to a state in which the gripping apparatus is in action such that sample container 6 is held by the gripping finger 4. According to some embodiments, the gripper finger 4 may be designed such that at least in a non-gripping state the gripping surface 41 is closer to the gripper finger body 44 than the at least one contacting surface 51. According to some embodiments, the contacting surfaces 51 may be more in a center than the rest of the gripper finger 4. For example, in a state where the gripping apparatus 3 does not grip a sample container 6, the contacting surface 51 may be designed to be closer to the gripping axis 49 than any of the gripping surfaces 41. Such embodiments are shown, in the Figures e.g. in Figures 2A and 2B, 3 and 4A to 4C. Specifically, Figure 2A shows a side view and Figure 2B a front view.

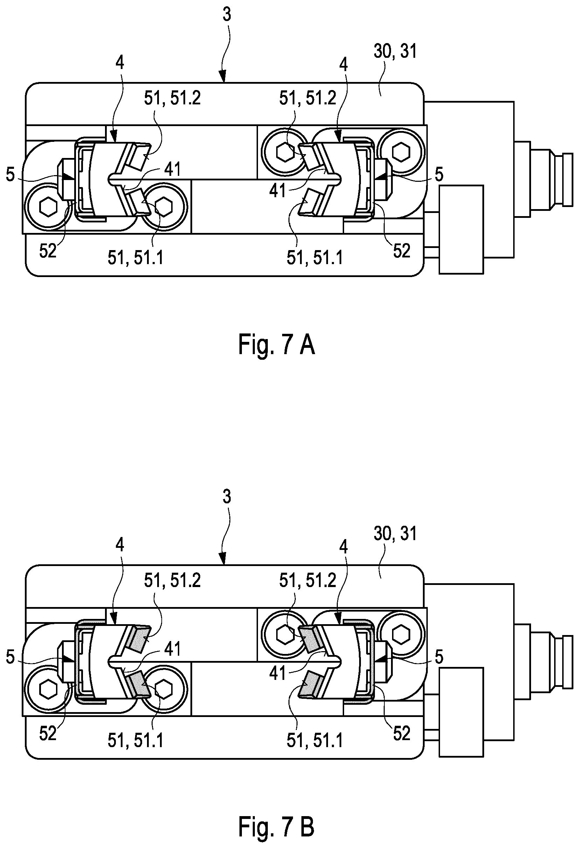

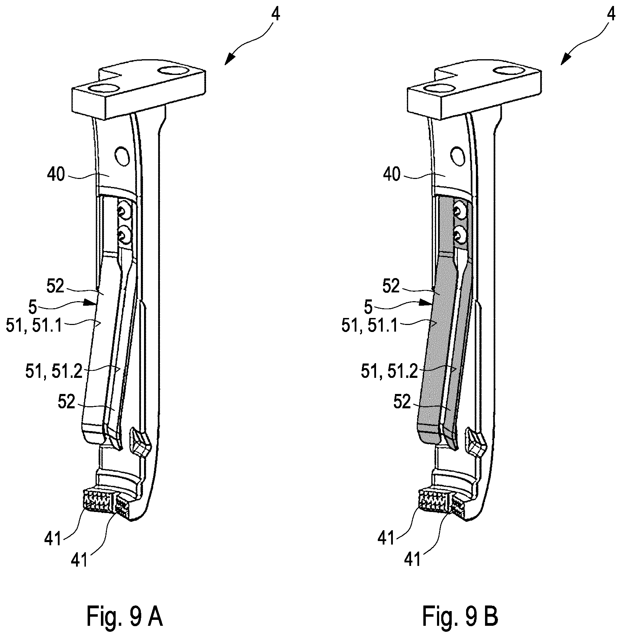

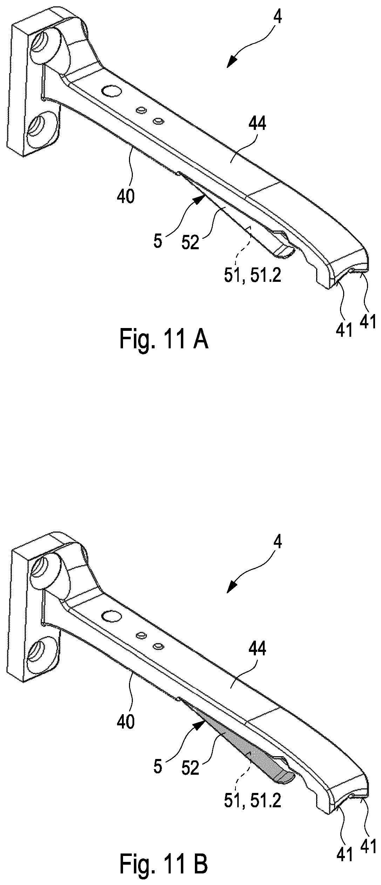

According to some embodiments, the contacting surface 51 and/or the elastic element 52 may be mounted to the gripper body 30 from an inside of the gripper finger 4 and/or from an outside of the gripper finger 4. The inside of the gripper finger 4 may be the side facing the sample container 6 during gripping, in particular the gripping side 40. The outside may be an opposite side to the inside. For example, the elastic element 52 may be mounted on the inner side. For example, the elastic element 52 may be attached to the gripper finger 4 with a screw. The elastic element 52 may be arranged at a first end of the contacting surface 51. An opposing end of the contacting surface 51 may be inserted into a hole which holds the contacting surface 51 and/or the elastic element 52 under tension. For example, in the embodiment of Figures 2A and 2B the contacting surface 51 and/or the elastic element 52 may be mounted to the gripper body 30 from the inside of the gripper finger 4, in particular visible by the screw on the inside. A further embodiment of a gripper finger 4 is shown in Figures 9A, 9B, 10A, 10B, 11A and 11B. In this embodiment the contacting surface 51 and/or the elastic element 52 are mounted to the gripper body 30 from the inside of the gripper finger 4, in particular visible by the two screws on the inside. The gripper finger body 44 may comprise a recess having a depth corresponding the height of the screw head. As visible in Figures 11A and 11B showing the back of the gripper finger 4, the extension of the screws on the back may be minimized. In the embodiment of Figures 6A, 6B and 7A, 7B the contacting surface 51 and/or the elastic element 52 may be mounted to the gripper body 30 from the outside of the gripper finger 4, in particular visible by the screw on the outside. The different options for mounting the contacting surface 51 and/or the elastic element 52 to the gripper body 30 may allow taking into account space conditions of the sample container holder and/or shape of the sample container 6.

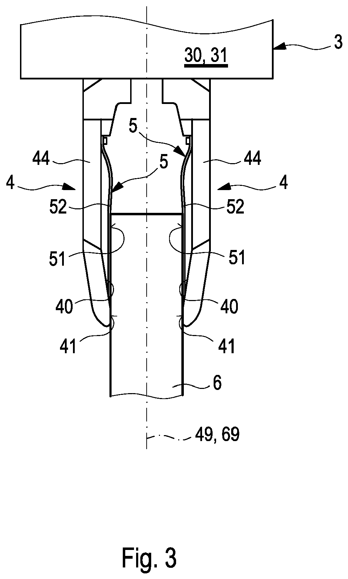

According to some embodiments, the at least one contacting surface may be designed for erecting an initially non-erected sample container 6 before the sample container 6 is gripped by the gripping apparatus 3. The erecting may be performed at the same movement of the gripper finger 4 with gripping the sample container 6. The term "erecting" as used herein is a broad term and is to be given its ordinary and customary meaning to a person of ordinary skill in the art and is not to be limited to a special or customized meaning. According to some embodiments, erecting the sample container 6 may comprise a process of minimizing a tilt angle. According to some embodiments, the angle may be an angle formed by a gripping axis 49 and a sample container axis 69. The sample container 6 may be erected in case these axes are identical. Figure 4C shows an example, wherein the sample container 6 is erected. For successful gripping it may be beneficial that the sample container 6 is erected. The sample container 6 may be initially non-erected. In this case, the axes differ and form the tilt angle. Figure 4A shows an example, wherein the sample container 6 is non-erected but tilted. Thus, the gripping axis 49 and the sample container axis 69 form a tilt angle. The tilt angle is shown as angle between the gripping axis 49, in particular the z-axis, and the sample container axis 69. The contacting surface 51 may exerting a supporting force, e.g. an erection force, to the sample container 6 thereby erecting the sample container 6. The erecting will be further explained, exemplarily, with respect to Figures 3 and 4A to C below.

As outlined above, the gripping surface 41 and the contacting surface 51 of the respective gripper finger 4 may be designed such that the contacting surface 51 may be a contacting point or face for contacting with the sample container 6.

According to some embodiments, the at least one contacting surface 51 may be designed for centering an initially non-centered sample container 6 between the at least two gripper fingers 4 before the sample container 6 is gripped by the gripping apparatus 3. The centering may be performed at the same movement of the gripper finger 4 with gripping the sample container 6. The term "centering" as used herein is a broad term and is to be given its ordinary and customary meaning to a person of ordinary skill in the art and is not to be limited to a special or customized meaning. For example, the centering may comprise a process of aligning the sample container 6 such that it can be gripped by the gripper finger 4, in particular such that angles between gripping surfaces 41 of the gripper fingers 4 and the sample container 6 are identical as possible. The centering will be further explained, exemplarily, with respect to Figures 3 and 4A to C.

The process of erecting and/or centering can be explained with respect to Figures 3 and 4A to 4C. In Figures 3 and 4A to 4C embodiments are shown in which the gripping apparatus 3 comprises two gripper fingers 4 each having a contacting surface 51, each of the contacting surfaces 51 of the two grippers may allow centering in one direction. For example, as indicated in Figures 4B and 4C, the gripper finger 4 may exert two different forces at two different points to the sample container 6: firstly, a supporting force exerted by the contacting surface 51, which may allow performing a pre-alignment of the sample container 6 before gripping; second, a gripping force exerted by the gripping surface 41 (if the gripping surfaces 41, after the status shown in Figure 4C are moved further in direction of sample container 6). Figure 3, shows an example, wherein the sample container 6 is gripped while being completely erected by the gripping surfaces 41. Thus, the gripping axis 49 and the sample container axis 69 are identical. Figure 4A shows an example, wherein the sample container 6 is tilted. Thus, the gripping axis 49 and the sample container axis 69 form a tilt angle. The tilt angle is shown as angle between the gripping axis 49, in particular the z-axis, and the sample container axis 69. Figure 4B shows an example of the moment in which the sample container 6 is contacted by the contacting surfaces 51 before the gripping surfaces 41 grip the sample container 6. For example, the contacting surface 51 may extend further out of the gripper finger body 44 than the gripping surface 41. Thus, before being gripped by the gripping surface 41, the sample container 6 to be gripped may be contacted by the contacting surface 51 which exerts the supporting force to the sample container 6 thereby erecting and/or centering the sample container 6. This may allow bringing the sample container 6 in the upright position as shown in Figure 4C.

The contacting surface 51 may allow lifting the smallest sample containers 6 a little during gripping. In addition, it may ensure that the sample container 6 is not pulled out over an edge after they have been placed. For example, after placing, the contacting surfaces 51 and/or the elastic element 52 may also serve as a stripper so that the caps are not pulled out at the contacting surface 51.

According to some embodiments, the gripping apparatus may be designed for gripping a sample container 6 having a sample container axis, the at least two gripper fingers 4 may define a gripping axis 49, and the at least one contacting surface 51 is designed for aligning the sample container axis 69 of a sample container 6 with the gripping axis 49 before the sample container 6 is gripped by the gripping apparatus 3. The aligning may be performed at the same movement of the gripper finger 4 with gripping the sample container 6. The term "sample container axis" as used herein is a broad term and is to be given its ordinary and customary meaning to a person of ordinary skill in the art and is not to be limited to a special or customized meaning. The sample container axis 69 may be a main axis of inertia. According to some embodiments, the sample container 6 may comprise at least one axis of symmetry defining the sample container axis 69. For example, in case of a cylindrical sample container 6, the axis of symmetry may be an axis of the cylindrical sample container 6. The axis of symmetry may extend along an elongated extension of the sample container 6 or parallel thereto. According to some embodiments, the at least two gripper fingers 4 may define a gripping axis 49. For example, the gripping axis 49 may be an axis extending through a center between the two gripper fingers 4, in particular in z-direction. For example, the gripping axis 49 may be an axis of symmetry of the gripping apparatus 3, e.g. an axis of symmetry of the constellation of the gripper fingers 4 of the gripping apparatus 3. However, other embodiments are possible. The term "aligning before the sample container is gripped by the gripping apparatus" as used herein is a broad term and is to be given its ordinary and customary meaning to a person of ordinary skill in the art and is not to be limited to a special or customized meaning. According to some embodiments, the aligning may comprise a process of changing a position of the sample container 6 to be gripped such as erecting and/or centering before the gripping using the gripping surface 41 is performed. For example, the aligning before the sample container is gripped by the gripping apparatus may be realized by that, in a state where the gripping apparatus 3 does not grip a sample container 6, the at least one contacting surface 51 may be designed to be closer to the gripping axis 49 than any of the gripping surfaces 41.

Further proposed is a gripper finger 4 for a gripping apparatus 3 for gripping a sample container 6. The gripper finger 4 comprises a gripper finger body 44 comprising a gripping surface 41 for gripping a sample container 6. The gripper finger 4 comprises at least one contacting surface 51 elastically mounted to the gripper finger body 44.

With respect to embodiments of the gripper finger 4, reference is made to the description above and to the further description below

According to some embodiments, the gripping apparatus 3 comprises at least one of the gripper fingers 4 as described herein. According to some embodiments, the at least one contacting surface 51 of the gripper finger 4 is designed as described above or further below. According to some embodiments, at least two gripper fingers 4 may be diametrically arranged in the gripping apparatus 3. According to some embodiments, all the gripper fingers 4 of the gripping apparatus may be gripper fingers 4 as described herein.

Figures 2A and 2B show an example of a gripper finger 4 in side view and in front view. In this example, the gripping surface 41 is arranged at a lower end of the gripper finger body 44. At an opposing end of the gripper finger body a connecting element to the gripper body 30 is shown. As shown in this example, the contacting surface 51 and the elastic element 52 may be designed as monolithic element 5. The as monolithic element 5 may be directly attached to the gripper finger body 44, in this displayed example by a screw at an upper end of the monolithic element 5. An opposing end of the monolithic element 5 may be inserted into a hole, e.g. a recess, whereby the elastic element 52 may be held under tension, as shown in this example.

The monolithic element 5 may be realized as a leaf spring, wherein a surface of the leaf spring directed to the gripping side may be designed to be used as a contacting surface 51. As visible in the side view of Figure 3, the monolithic element 5, and in particular its contacting surface 51, may be arranged to protrude over the gripping surface 41, so that in normal operation it contacts the sample container 6 before the gripping surface 41.

Figure 3 shows two gripping fingers 4 during gripping of the sample container 6. During gripping, the sample container 6 may be gripped by the gripping surfaces 41 and contacted by the contacting surfaces 51 of the gripper fingers 4. Before the gripping between the gripping surface 41 and the sample container 6, however, the sample container 6 may first be contacted by the contacting surfaces 51 only. The contacting surfaces 51 may support the sample container 6 such that it may be erected by the contacting surfaces 51. This may ensure that the gripping axis 49 and the sample container axis 69 are identical. In this position, the gripper finger 4 can be moved further together such that the sample container 6 can be clamped between the gripping surfaces 41 of the two gripper fingers 4.

The contacting surface 51 may be elastically mounted to the gripper finger 4 with an elastic play such that, if the contacting surface 51 is further moved towards the sample container 6, the contacting surface 51 using said play is at least in part moved back, e.g. to a level of the gripping surfaces 41 (an example of which can be seen in Figure 3, where the move back is effectively realized by a deformation).

According to some embodiments the at least one contacting surface 51 may comprise at least a first section 51.1 and a second section 51.2. The first section 51.1 may be designed to apply a first force to a sample container 6 about to be gripped by the gripper finger 4 and the second section 51.2 may be is designed to apply a second force to a sample container 6 about to be gripped by the gripper finger 4. The direction of the first force may be different from the direction of the second force. For example, as shown exemplarily in Figure 5, the at least one contacting surfaces each may have a first section 51.1 and a second section 51.2.

According to some embodiments, at least in one cross-section, the first section 51.1 may not be parallel to the second section 51.2. For example, at least in one cross-section, the first section 51.1 and the second section 51.2 may be at an angle to each other.

According to some embodiments, at least in one cross-section, the first direction and the second direction may differ by at least ten angle-degree from each other.

According to some embodiments, the first section 51.1 and the second section 51.2 may be adjacent to each other.

According to some embodiments, the first section 51.1 and the second section 51.2 may be not adjacent to each other.

As shown, e.g. in the embodiment of Figure 5, each of the contacting surface 51 may be attached via a spring 52 to the gripper finger body 44 of the respective gripper finger 4. Centering of the sample container 6 is symbolized by arrows. Using a contacting surface 51 having a first section 51.1 and a second section 51.2 may allow applying forces of different directions to the sample container 6 and, thus, centering in at least two directions.

Figures 6A and 6B show a further embodiment of two gripper fingers 4 connected to the gripper body 30 in perspective view. Two gripping surfaces 41 are shown at a lower end of the gripper finger body 44 of each gripper finger 4. In Figures 6A and 6B, each gripper finger 4 comprises a monolithic element comprising an elastic element 52 and a contacting surface 51; the monolithic element being highlighted in Figure 6B for visualization. In this embodiment, the gripping surface 41 is arranged at a lower end of the gripper finger body 44 and the contacting surfaces 51 comprises a first section 51.1 and a second section 51.2. The contacting surfaces 51 may be designed as bent surfaces having an almost quadratic recess. As shown in Figure 6, the contacting surfaces 51 may be connected via the elastic element 52 to the gripper finger body 44.

Figures 7A and 7B show a view from below on the embodiment of the gripping apparatus 3 of Figures 6A and 6B. The gripper body 30 is visible and two gripper fingers 4 connected thereto. In Figure 7B the monolithic element comprising the elastic element 52 and the contacting surface 51 for each gripper finger 4 is shown highlighted for visualization. As displayed, the first section 51.1 and a second section 51.2 of the contacting surface 51 of each gripper finger 4 may be designed to have an angle between each other.

Figures 8A and 8B show an example of a gripper finger 4 in perspective view. As displayed, the gripper finger 4 may comprise a monolithic element comprising an elastic element 52 and contacting surface 51; the monolithic element is highlighted in Figure 8B for visualization. In the displayed example, the gripper finger 4 comprises a contacting surface 51 comprising two sections 51.1, 51.2 that are arranged to form an angle between each other. As displayed in this example, each of the sections 51.1, 51.2 may be sloped in z-direction, e.g. both in the in the up-direction and in the down-direction, which may allow lowering the risk of damaging sticker, e.g. comprising a barcode, attached to the sample containers. In the example of Figure 8, a gripping surface 41 is arranged at a lower end of the gripper finger body 44 and in particular below the contacting surface 51. As further displayed, a gripping surface 41 may be structured, e.g. corrugated.

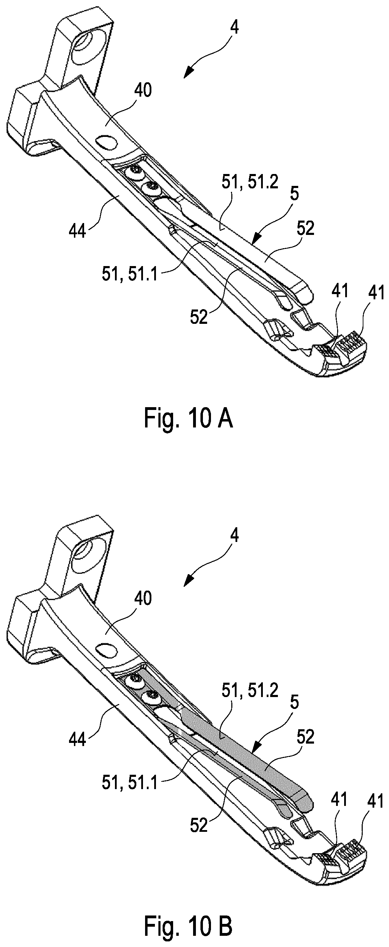

Figures 9 to 11 show an embodiment of a gripper finger 4, in perspective view (Figures 9A and 9B), in a view onto a gripping side (Figures 10A and 10B), and in a view onto a back (Figures 11A and 11B). As displayed, the gripper finger 4 may comprise a structured gripping surface 41 at a lower end of the gripper finger body 44. The displayed gripper finger 4 comprises a contacting surface 51 and an elastic element 52 as part of a monolithic element 5 that is highlighted in Figures 9B, 10B and 11B for visualization. As displayed, the monolithic element 5 may be attached to a gripper finger body 44 so that the contacting surface 51 are elastically mounted to the gripper finger body 44. As further displayed, the contacting surface 51 may comprise two sections 51.1 and 51.2. In the displayed example, the two sections 51.1 and 51.2 of the contacting surface 51 contact a sample container 6 to be gripped from different angles and will each exercise a force in a different direction. When e.g. about to be gripped by a pair of such gripper fingers 4, this may lead to a stabilization of the sample container 6 when it is contacted and in particular when it is contacted but not yet gripped.

At an upper end of the leaf springs may be directly attached to the gripper finger body 44, in this case by a screw. As shown in the displayed example, the contacting surface 51 may be bent.

Figures 12A and 12B show an embodiment of the gripper finger 4 comprising a contacting surface 51 with a first section 51.1 and a second section 51.2 comprised in a monolithic element 5 with elastic properties, thus comprising an elastic element 52. The monolithic element 5 is highlighted in Figure 12 B for visualization. Two gripping surfaces 41 are shown at a lower end of the gripper finger body 44; in this example without any corrugations.

Further proposed is a laboratory instrument 7 for handling a sample container 6 comprising one of the gripping apparatus 3 as described herein. An embodiment of the laboratory instrument is shown in Figure 1.

The term "laboratory" as used herein is a broad term and is to be given its ordinary and customary meaning to a person of ordinary skill in the art and is not to be limited to a special or customized meaning. According to some embodiments, the laboratory 7 may be at least one environment comprising a plurality of laboratory instruments such as at least one analyzer and/or at least one instrument configured for analyzing at least one sample, in particular at least one biological sample. For example, the laboratory 7 may be a location configured for work in the field of the natural sciences and/or engineering in the sense that it offers the opportunity to conduct corresponding measurements and controls. For example, the laboratory 7 may be an analytical laboratory.

According to some embodiments, the laboratory instrument 7 may be part of an in-vitro diagnostics (IVD) laboratory. The term "IVD laboratory" as used herein is a broad term and is to be given its ordinary and customary meaning to a person of ordinary skill in the art and is not to be limited to a special or customized meaning. According to some embodiments, the IVD laboratory may be a laboratory designed for performing at least one test on a sample, e.g. a biological sample that have been taken off the human body or animal body. For example, the test on the sample may comprise applying at least one reagent to the sample and monitoring a detectable reaction. According to some embodiments, the IVD laboratory may be a clinical laboratory. According to some embodiments, the IVD laboratory may be a medical laboratory. According to some embodiments, the IVD laboratory may be a forensic laboratory or a blood bank.

The term "laboratory instrument" as used herein is a broad term and is to be given its ordinary and customary meaning to a person of ordinary skill in the art and is not to be limited to a special or customized meaning. According to some embodiments, the laboratory instrument 7 may be any apparatus or apparatus component or apparatus section operable to execute one or more processing steps or workflow steps on one or more samples. For example, the processing steps may comprise physically executing processing steps such as centrifugation, aliquotation, sample analysis and the like. According to some embodiments, the laboratory instrument 7 may be a pre-analytical instruments, a post-analytical instruments, and/or an analytical instrument. For example, the processing steps may be pre-analytical processing steps (such as aliquoting, sample preparation), analytical processing steps (such as an assay to determine the presence and/or concentration of an analyte in the biological sample) or post-analytical processing steps (such as archiving of the biological sample).

According to some embodiments, the laboratory instrument 7 may be an analytical laboratory instrument configured to obtain at least one measurement value. For example, the analytical instrument may be operable for determining via various chemical, biological, physical, optical or other technical procedures a parameter value of the sample or a component thereof. For example, the analytical instrument may be operable for measuring said parameter of the sample or of at least one analyte and return the obtained measurement value. The list of possible analysis results returned by the analyzer comprises, without limitation, concentrations of the analyte in the sample, a digital (yes or no) result indicating the existence of the analyte in the sample (corresponding to a concentration above the detection level), optical parameters, DNA or RNA sequences, data obtained from mass spectroscopy of proteins or metabolites and physical or chemical parameters of various types. According to some embodiments, the analytical instrument may comprise units assisting with the pipetting, dosing, and mixing of samples and/or reagents. According to some embodiments, the analytical instrument may comprise a reagent holding unit for holding reagents to perform the assays. Reagents may be arranged for example in the form of vessels, containers or cassettes containing individual reagents or group of reagents, placed in appropriate receptacles or positions within a storage compartment or conveyor. It may comprise a consumable feeding unit. According to some embodiments, the analytical instrument may comprise a process and detection system whose workflow is optimized for certain types of analysis. Examples of such analytical instruments are clinical chemistry analyzers, coagulation chemistry analyzers, immunochemistry analyzers, urine analyzers, nucleic acid analyzers, used to detect the result of chemical or biological reactions or to monitor the progress of chemical or biological reactions.

According to some embodiments, the laboratory instrument 7 may be a pre-analytical laboratory instrument. According to some embodiments, the pre-analytical laboratory instrument may be or may comprise one or more devices for executing one or more pre-analytical container-processing steps on one or more sample container 6 such as on a sample contained by a sample container 6. According to some embodiments, the pre-analytical laboratory instrument may be designed for preparing the sample container 6, in particular a sample contained by the sample container 6, for one or more succeeding analytical tests. For example, a pre-analytical container-processing step can be, for example, a centrifugation step, a capping-, decapping- or recapping step, an aliquotation step, a step of adding buffers to a sample and the like. According to some embodiments, the laboratory may comprise at least one pre-analytical laboratory instrument designed for pretreating the biological sample prior to use, such as preparing plasma from blood, diluting viscous fluids, lysis or the like. According to some embodiments, the pretreating may involve filtration, distillation, concentration, inactivation of interfering components, and the addition of reagents. According to some embodiments, the pre-analytical laboratory instrument may be designed for rendering an initially solid or semi-solid biological sample liquid by dissolving or suspending it with a suitable liquid medium.

According to some embodiments, the laboratory instrument may be a post-analytical laboratory instrument. According to some embodiments, the post-analytical laboratory instrument may be designed for performing at least one post-analytical container-processing step. According to some embodiments, the post-analytical laboratory instrument may be designed for automatically processing and/or storing one or more samples. For example, the post-analytical container-processing steps may comprise a recapping step, a step for unloading a sample from the sample container 6 or a step for transporting the sample container 6 to a storage unit or to a unit for collecting biological waste.

According to some embodiments, the laboratory instrument 7 may comprise a sample handling system comprising at least one sample transport device 1, e.g. shown in Figure 1. The term "sample transport device" as used herein is a broad term and is to be given its ordinary and customary meaning to a person of ordinary skill in the art and is not to be limited to a special or customized meaning. According to some embodiments, the sample transport device 1 may be configured for moving and/or transporting and/or transferring and/or carrying sample container 6 from one position to another. The sample transport device 1 may comprise the robotic movement apparatus 2.

Figure 1 shows an exemplary laboratory instrument 7 comprising a gripping apparatus 3. The laboratory instrument comprises the sample transport device 1 comprising the robotic movement apparatus 2. The shown gantry system may comprise a rail in x-direction 20, a rail in y-direction 21 and a beam 22 in z-direction. The sample transport device 1 may be designed for moving the gripping apparatus 3 along the three shown directions. The sample container 6 may be positioned in a rack and may be gripped by the gripping apparatus 3 such as for positioning the sample container for measuring. In addition, Figure 1 gives an overview of components of an exemplary gripping apparatus 3 such as a gripper body 30 comprising a gripper actuator 31 and two gripper fingers 4.

It will be understood that many variations could be adopted based on the specific structure hereinbefore described without departing from the scope of the invention as defined in the following claims.

### List of reference numbers

- 1: sample transport device
- 2: robotic movement apparatus
- 3: gripping apparatus
- 4: gripper finger
- 5: monolithic element
- 6: sample container
- 7: laboratory instrument
- 8: control unit
- 20: rail in x-direction
- 21: rail in y-direction
- 22: beam in z-direction
- 30: gripper body
- 31: gripper actuator
- 41: gripping surface
- 40: gripping side
- 44: gripper finger body
- 49: gripping axis
- 51: contacting surface
- 51.1: first section
- 51.2: second section
- 52: elastic element
- 69: sample container axis

## Claims

1. A gripper finger (4) for a gripping apparatus (3) for gripping a sample container (6), the gripper finger (4) comprising a gripper finger body (44) comprising a gripping surface (41) for gripping a sample container (6),
wherein the gripper finger (4) comprises at least one contacting surface (51) elastically mounted to the gripper finger body (44), wherein the at least one contacting surface (51) is elastically mounted to the gripper finger body (44) via an elastic element (52), **characterized in that**
the at least one contacting surface (51) and the elastic element (52) are comprised in a monolithic element (5).

2. The gripper finger (4) according to the preceding claim, wherein
the at least one contacting surface (51) itself is rigid.

3. The gripper finger (4) according to one of the preceding claims, wherein
the gripper finger (4) is designed such that the at least one contacting surface (51) is closer to a sample container (6) about to be gripped by the gripper finger (4) than the gripping surface (41).

4. The gripper finger (4) according to the preceding claim, wherein
the gripper finger (4) is designed such that the at least one contacting surface (51) has a play that allows the at least one contacting surface (51) to be pushed at least to a level of the gripping surface (41).

5. The gripper finger (4) according to one of the preceding claims referring to a gripper finger, wherein
the at least one contacting surface (51) comprises at least a first section (51.1) and a second section (51.2),
the first section (51.1) is designed to apply a first force to a sample container (6) about to be gripped by the gripper finger (4),
the second section (51.2) is designed to apply a second force to a sample container (6) about to be gripped by the gripper finger (4), and
the direction of the first force is different from the direction of the second force.

6. A gripping apparatus (3) for gripping a sample container (6), the gripping apparatus (3) comprising
a gripper body comprising a gripper actuator (31);
at least two gripper fingers (4) each comprising a gripping surface (41),
wherein at least one of the gripper fingers (4) is movably coupled to the gripper body (30), and
wherein the gripping apparatus (3) is designed for gripping a sample container (6) with the gripping surfaces (41) of the at least two gripper fingers (4) by moving the at least one movable gripper finger (4); and
**characterized in that**
at least one of the gripper fingers (4) is a gripper finger according to any one of the claims 1 to 5.

7. The gripping apparatus (3) according to the preceding claim, wherein
the gripping apparatus (3) is designed for gripping a sample container (6) having a sample container axis (69),
the at least two gripper fingers (4) define a gripping axis (49), and
the at least one contacting surface (51) is designed for aligning the sample container axis (69) of a sample container (6) with the gripping axis (49) before the sample container (6) is gripped by the gripping apparatus (3).

8. A laboratory instrument (7) for handling a sample container (6) comprising one of the gripping apparatus (3) according to any one of claims 6 or 7 .

## Patentansprüche

1. Greiffinger (4) für eine Greifvorrichtung (3) zum Greifen eines Probenbehälters (6), wobei der Greiffinger (4) einen Greiffingerkörper (44) umfasst, der eine Greiffläche (41) zum Greifen eines Probenbehälters (6) umfasst,
wobei
der Greiffinger (4) mindestens eine Kontaktfläche (51) umfasst, die elastisch an dem Greiffingerkörper (44) angebracht ist, wobei die mindestens eine Kontaktfläche (51) über ein elastisches Element (52) an dem Greiffingerkörper (44) elastisch angebracht ist,
**dadurch gekennzeichnet, dass**
die mindestens eine Kontaktfläche (51) und das elastische Element (52) in einem monolithischen Element (5) enthalten sind.

2. Greiffinger (4) nach dem vorhergehenden Anspruch, wobei
die mindestens eine Kontaktfläche (51) selbst starr ist.

3. Greiffinger (4) nach einem der vorhergehenden Ansprüche, wobei
der Greiffinger (4) so ausgelegt ist, dass die mindestens eine Kontaktfläche (51) näher an einem Probenbehälter (6) ist, der kurz davor ist, von dem Greiffinger (4) gegriffen zu werden, als die Greiffläche (41).

4. Greiffinger (4) nach dem vorhergehenden Anspruch, wobei
der Greiffinger (4) so ausgelegt ist, dass die mindestens eine Kontaktfläche (51) ein Spiel aufweist, das es ermöglicht, die mindestens eine Kontaktfläche (51) mindestens auf ein Niveau der Greiffläche (41) zu schieben.

5. Greiffinger (4) nach einem der vorhergehenden Ansprüche, die sich auf einen Greiffinger beziehen, wobei
die mindestens eine Kontaktfläche (51) mindestens einen ersten Abschnitt (51.1) und einen zweiten Abschnitt (51.2) umfasst,
der erste Abschnitt (51.1) dazu ausgelegt ist, eine erste Kraft auf einen Probenbehälter (6) auszuüben, der kurz davor ist, von dem Greiffinger (4) gegriffen zu werden,
der zweite Abschnitt (51.2) dazu ausgelegt ist, eine zweite Kraft auf einen Probenbehälter (6) auszuüben, der kurz davor ist, von dem Greiffinger (4) gegriffen zu werden, und
die Richtung der ersten Kraft von der Richtung der zweiten Kraft verschieden ist.

6. Greifvorrichtung (3) zum Greifen eines Probenbehälters (6), wobei die Greifvorrichtung (3) Folgendes umfasst:
einen Greifkörper, der einen Greifaktuator (31) umfasst;
mindestens zwei Greiffinger (4), die jeweils eine Greiffläche (41) umfassen,
wobei mindestens einer der Greiffinger (4) beweglich mit dem Greifkörper (30) gekoppelt ist, und
wobei die Greifvorrichtung (3) zum Greifen eines Probenbehälters (6) mit den Greifflächen (41) der mindestens zwei Greiffinger (4) durch Bewegen des mindestens einen beweglichen Greiffingers (4) ausgelegt ist; und
**dadurch gekennzeichnet, dass**
mindestens einer der Greiffinger (4) ein Greiffinger nach einem der Ansprüche 1 bis 5 ist.

7. Greifvorrichtung (3) nach dem vorhergehenden Anspruch, wobei
die Greifvorrichtung (3) zum Greifen eines Probenbehälters (6) mit einer Probenbehälterachse (69) ausgelegt ist,
die mindestens zwei Greiffinger (4) eine Greifachse (49) definieren und
die mindestens eine Kontaktfläche (51) zum Ausrichten der Probenbehälterachse (69) eines Probenbehälters (6) auf die Greifachse (49) ausgelegt ist, bevor der Probenbehälter (6) von der Greifvorrichtung (3) gegriffen wird.

8. Laborinstrument (7) zum Handhaben eines Probenbehälters (6), umfassend eine der Greifvorrichtungen (3) nach einem der Ansprüche 6 oder 7.

## Revendications

1. Doigt préhenseur (4) pour un appareil de préhension (3) permettant de saisir un récipient d'échantillons (6), le doigt préhenseur (4) comprenant un corps de doigt préhenseur (44) comprenant une surface de préhension (41) permettant de saisir un récipient d'échantillons (6),
dans lequel
le doigt préhenseur (4) comprend au moins une surface de contact (51) montée de manière élastique sur le corps de doigt préhenseur (44), dans lequel l'au moins une surface de contact (51) est montée de manière élastique sur le corps de doigt préhenseur (44) par l'intermédiaire d'un élément élastique (52),
**caractérisé en ce que**
l'au moins une surface de contact (51) et l'élément élastique (52) sont compris dans un élément monolithique (5).

2. Doigt préhenseur (4) selon la revendication précédente, dans lequel
l'au moins une surface de contact (51) est elle-même rigide.

3. Doigt préhenseur (4) selon l'une des revendications précédentes, dans lequel
le doigt préhenseur (4) est conçu de telle sorte que l'au moins une surface de contact (51) est plus proche d'un récipient d'échantillons (6) sur le point d'être saisi par le doigt préhenseur (4) que de la surface de préhension (41).

4. Doigt préhenseur (4) selon la revendication précédente, dans lequel
le doigt préhenseur (4) est conçu de telle sorte que l'au moins une surface de contact (51) a un jeu qui permet à l'au moins une surface de contact (51) d'être poussée au moins à un niveau de la surface de préhension (41).

5. Doigt préhenseur (4) selon l'une des revendications précédentes se référant à un doigt préhenseur, dans lequel
l'au moins une surface de contact (51) comprend au moins une première section (51.1) et une seconde section (51.2),
la première section (51.1) est conçue pour appliquer une première force à un récipient d'échantillons (6) sur le point d'être saisi par le doigt préhenseur (4),
la seconde section (51.2) est conçue pour appliquer une seconde force à un récipient d'échantillons (6) sur le point d'être saisi par le doigt préhenseur (4), et
la direction de la première force est différente de la direction de la seconde force.

6. Appareil de préhension (3) permettant de saisir un récipient d'échantillons (6), l'appareil de préhension (3) comprenant
un corps de préhenseur comprenant un actionneur de préhenseur (31) ;
au moins deux doigts préhenseurs (4) comprenant chacun une surface de préhension (41), dans lequel au moins un des doigts préhenseurs (4) est accouplé de manière mobile au corps de préhenseur (30), et
dans lequel l'appareil de préhension (3) est conçu pour saisir un récipient d'échantillons (6) avec les surfaces de préhension (41) des au moins deux doigts préhenseurs (4) en déplaçant l'au moins un doigt préhenseur (4) mobile ; et
**caractérisé en ce que**
au moins un des doigts préhenseurs (4) est un doigt préhenseur selon l'une quelconque des revendications 1 à 5.

7. Appareil de préhension (3) selon la revendication précédente, dans lequel
l'appareil de préhension (3) est conçu pour saisir un récipient d'échantillons (6) ayant un axe de récipient d'échantillons (69),
les au moins deux doigts préhenseurs (4) définissent un axe de préhension (49), et
l'au moins une surface de contact (51) est conçue pour aligner l'axe de récipient d'échantillons (69) d'un récipient d'échantillons (6) avec l'axe de préhension (49) avant que le récipient d'échantillons (6) ne soit saisi par l'appareil de préhension (3).

8. Instrument de laboratoire (7) permettant de manipuler un récipient d'échantillons (6) comprenant l'un de l'appareil de préhension (3) selon l'une quelconque des revendications 6 ou 7.
